# EUROPEAN PATENT APPLICATION

(11) **EP 3 306 105 A1**
(43) Date of publication of application: **11.04.2018**
(21) Application number: 15893395.2
(22) Date of filing: 30.10.2015
(51) Int. Cl.: F04D 29/58, F04D 29/44

(54) **BLOWING DEVICE AND CLEANER**

(30) Priority: 25.05.2015 JP 2015105924; 29.05.2015 US 201562168165 P; 29.06.2015 US 201562185854 P
(71) Applicant: Nidec Corporation, Kyoto-shi, Kyoto 601-8205 (JP)
(72) Inventor: HAYAMITSU, Ryosuke, Kyoto-shi Kyoto 601-8205 (JP); SAWADA, Tomoyoshi, Kyoto-shi Kyoto 601-8205 (JP); SHIOZAWA, Kazuhiko, Kyoto-shi Kyoto 601-8205 (JP)
(74) Representative: Stöckeler, Ferdinand
(86) International application number: PCT/JP2015/080702
(87) International publication number: WO 2016/189763

(57) **Abstract**

A blower according to an exemplary embodiment of the present invention includes a rotor that has a shaft disposed extending vertically, a stator positioned at an outer side of the rotor in a radial direction, a cylindrical housing extending in the axial direction and accommodating the rotor and the stator, and an impeller attached to the shaft, at an upper side from the stator. The stator includes a ring-shaped core back portion, plurality of teeth portions extending from the core back portion toward an inner side in the radial direction, an insulator that covers at least part of the teeth portions, a coil wound on each of the teeth portions via the insulator, and a flow path forming member of which at least part is positioned further at an inner side in the radial direction than the core back portion. The housing has a through hole that opens to the inner side. The flow path forming member connects part of the insulator or the coil at one side in the circumferential direction and part of the insulator or the coil at another side in the circumferential direction, and forms a flow path that passes further at an inner side in the radial direction than the core back portion. The flow path connects to the through hole of the housing.

## Description

### Technical Field

The present invention relates to a blower and a vacuum cleaner.

### Background Art

There is known a blower of a vacuum cleaner, where cooling efficiency is increased by passing exhaust air through the interior of the motor (PTL 1).

### Citation List

### Patent Literature

PTL 1: Japanese Unexamined Patent Application Publication No. 11-148484

### Summary of Invention

### Technical Problem

However, there has been a problem in the blower knight PTL 1 that turbulence is generated in the flow of exhaust air when passing through the interior of the motor, reducing venting efficiency.

It is an object of one aspect of the present invention to provide a blower that efficiently cools the motor and also has increased venting efficiency.

### Solution to Problem

A blower according to an exemplary embodiment of the present invention includes a rotor that has a shaft disposed following a central axis extending vertically, a stator positioned at an outer side of the rotor in a radial direction, a cylindrical housing extending in the axial direction and accommodating the rotor and the stator, and an impeller attached to the shaft, at an upper side from the stator. The stator includes a ring-shaped core back portion, plurality of teeth portions extending from the core back portion toward an inner side in the radial direction, an insulator that covers at least part of the teeth portions, a coil wound on each of the teeth portions via the insulator, and a flow path forming member of which at least part is positioned further at an inner side in the radial direction than the core back portion. The housing has a through hole that opens to the inner side. The flow path forming member connects part of the insulator or the coil at one side in the circumferential direction and part of the insulator or the coil at another side in the circumferential direction, and forms a flow path that passes further at an inner side in the radial direction than the core back portion. The flow path connects to the through hole of the housing. Advantageous Effects of Invention

According to the present invention, a blower can be provided that efficiently cools the motor and also has increased venting efficiency.

### Brief Description of Drawings

[Fig. 1] Fig. 1 is a perspective view illustrating a blower according to the present embodiment.
[Fig. 2] Fig. 2 is a cross-sectional diagram illustrating a blower according to an embodiment.
[Fig. 3] Fig. 3 is a disassembled perspective view of the blower according to the embodiment.
[Fig. 4] Fig. 4 is a perspective view, viewing a motor according to the embodiment from the lower side.
[Fig. 5] Fig. 5 is a perspective view of a stator according to the embodiment.
[Fig. 6] Fig. 6 is a disassembled perspective view illustrating the stator, a sensor board, and a lower lid.
[Fig. 7] Fig. 7 is a plane cross-sectional view of the blower.
[Fig. 8] Fig. 8 is an explanatory diagram illustrating a mounting arrangement of a rotary sensor.
[Fig. 9] Fig. 9 is a partial cutaway perspective view of an exhaust air guide member.
[Fig. 10] Fig. 10 is a partial enlarged cross-sectional view illustrating a first guide path of the blower according to the present embodiment.
[Fig. 11] Fig. 11 is a partial enlarged cross-sectional view illustrating a second guide path of the blower according to the present embodiment.
[Fig. 12] Fig. 12 is a plan view of moving blades of the impeller.
[Fig. 13] Fig. 13 is a side view illustrating the blower according to the present embodiment.
[Fig. 14] Fig. 14 is a cross-sectional view illustrating an exhaust air guide hole (flow path) according to the present embodiment.
[Fig. 15] Fig. 15 is a cross-sectional view illustrating an exhaust air guide hole (flow path) according to another example.
[Fig. 16] Fig. 16 is a plane cross-sectional view of a blower according to a first modification.
[Fig. 17] Fig. 17 is a longitudinal-sectional view of a blower (centrifugal air blower) according to a second modification.
[Fig. 18] Fig. 18 is a plan view of a stator according to the second modification.
[Fig. 19] Fig. 19 is a plan view of a core piece according to the second modification.
[Fig. 20] Fig. 20 is a cross-sectional view of another example of the blower according to the second modification in Fig. 17.
[Fig. 21] Fig. 21 is a perspective view illustrating a vacuum cleaner that has the blower.

### Description of Embodiments

A blower according to an embodiment of the present invention will be described with reference to the drawings. Note that the scope of the present invention is not restricted to the following embodiment, and changes may be optionally made within the scope of the technical idea of the present invention. Also note that in the drawings below, the scale, numbers, and so forth, of the structures, may be different from the actual structures, in order to facilitate understanding of the configurations.

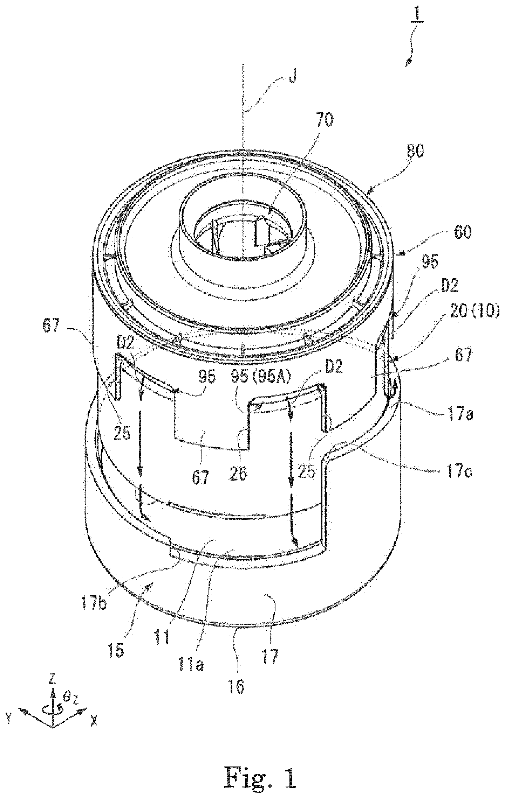

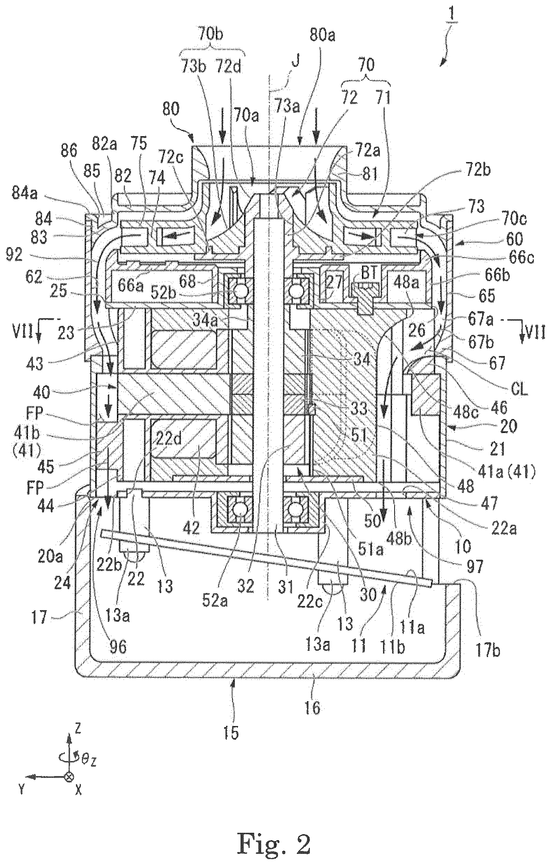

Also, in the drawings, an XYZ coordinate system will be illustrated as a three-dimensional orthogonal coordinate system as appropriate. In the XYZ coordinate system, a Z-axis direction is a direction parallel to an axial direction along a central axis J illustrated in Fig. 1. A Y-axis direction is a direction orthogonal to the Z-axis direction and is a right-left direction in Fig. 2. An X-axis direction is a direction that is orthogonal to both of the Y-axis direction and the Z-axis direction.

Also, in the following description, a direction (the Z-axis direction) in which the central axis J extends will be referred to as a vertical direction. The positive side in the Z-axis direction (+Z side) will be referred to as the "upper side (upper side in the axial direction)" and the negative side in the Z-axis direction (-Z side) will be referred to as the "lower side (lower side in the axial direction)". Note that the vertical direction, the upper side, and the lower side are terms that are used simply for the purpose of description and do not limit the actual positional relationship or direction. In addition, unless otherwise specifically noted, a direction (the Z-axis direction) parallel to the central axis J will be simply referred to as an "axial direction", a radial direction of which the central axis J is the center will be simply referred to as a "radial direction", and a circumferential direction around the central axis J will be simply referred to as a "circumferential direction".

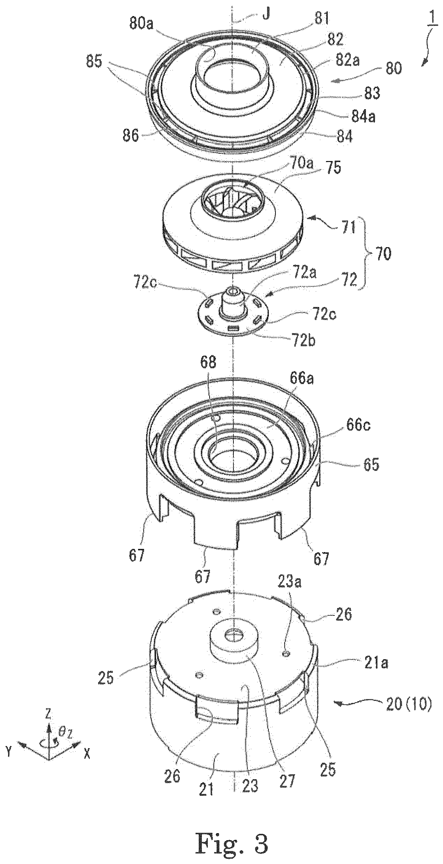

Fig. 1 is a perspective view illustrating a blower 1 according to the present embodiment. Fig. 2 is a cross-sectional diagram illustrating a blower 1 according to the present embodiment. Fig. 3 is a disassembled perspective view of the blower 1 according to the present embodiment, excluding a control board 11 and board case 15.

A blower 1 includes a motor 10, an impeller 70, an exhaust air guide member 60, an impeller housing 80, a control board 11, and a board case 15, as illustrated in Fig. 1 through Fig. 3. The motor 10 has a rotor 30 and stator 40, which will be described later, so the blower 1 has the rotor 30, the stator 40, a housing 20, and the impeller 70.

The exhaust air guide member 60 is attached to the upper side (+Z side) of the motor 10. The impeller housing 80 is attached to the upper side of the exhaust air guide member 60. The impeller 70 is accommodated between the exhaust air guide member 60 and impeller housing 80. The impeller 70 is attached to the motor 10 rotatably on the central axis J. The control board 11, and the board case 15 that covers the control board 11, are attached on the lower side (-Z side) of the motor 10.

### [Motor]

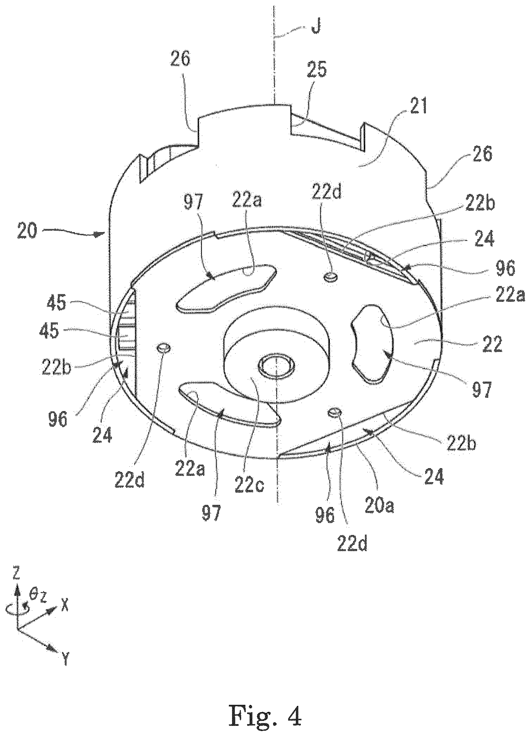

Fig. 4 is a perspective view, viewing a motor 10 according to the present embodiment from the lower side.

The motor 10 includes the housing 20, a lower lid 22, the rotor 30 that has a shaft 31, the stator 40, a sensor board 50, a lower-side bearing 52a, and an upper-side bearing 52b, as illustrated in Fig. 2 and Fig. 4.

The housing 20 is a cylindrical covered container accommodating the rotor 30 and stator 40. More specifically, the housing 20 is a cylindrical form extending in the axial direction, and accommodates the rotor 30 and stator 40. The housing 20 has a peripheral wall 21 that is cylindrical in shape, an upper lid portion 23 positioned at the upper end of the peripheral wall 21, and an upper-side bearing holding portion 27 positioned at the middle portion of the upper lid portion 23. The stator 40 is fixed on the inner side face of the housing 20. The upper-side bearing holding portion 27 is a cylinder protruding toward the upper side from the middle portion of the upper lid portion 23. The upper-side bearing holding portion 27 holds the upper-side bearing 52b within.

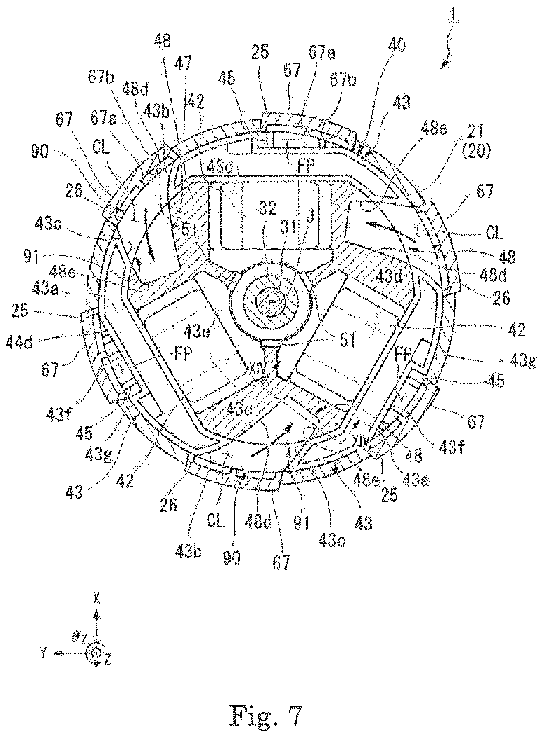

Multiple through holes 25 and 26 are provided at an edge portion 21a of the peripheral wall 21 of the housing 20 and upper lid portion 23, as illustrated in Fig. 3. That is to say, the housing 20 has through holes 25 and 26 that open to the inner side. Three through holes 25 and three through holes 26 are positioned alternately around the axis (see Fig. 7). The through holes 25 and 26 reach from the upper side of the peripheral wall 21 to the outer edge of the upper lid portion 23. The through holes 25 and 26 pass through the peripheral wall 21 in the radial direction. The through holes 25 and 26 also pass through the upper lid portion in the vertical direction near the outer edge thereof in the radial direction.

The lower lid 22 is attached to an opening at the lower side (-Z side) of the housing 20. A cylindrical lower-side bearing holding portion 22c that protrudes toward the lower side from the lower face of the lower lid 22 is provided to the middle portion of the lower lid 22. The lower-side bearing holding portion 22c holds the lower-side bearing 52a.

The lower lid 22 is provided with through arc-shaped holes 22a having width in the radial direction, at three positions around the axis, as illustrated in Fig. 4. Notched portions 22b where the peripheral portion of the lower lid 22 has been linearly notched are provided at three positions on the peripheral edge of the lower lid 22. Gaps between the opening end 20a at the lower side of the housing 20 and the notched portions 22b are lower-side openings 24 of the motor 10.

The rotor 30 has the shaft 31, a rotor magnet 33, a lower-side magnet fixing member 32, and an upper-side magnet fixing member 34, as illustrated in Fig. 2. That is to say, the rotor 30 has the shaft 31. The rotor magnet 33 has a cylindrical shape encompassing the shaft 31 around the axis (θz direction) at the outer side in the radial direction. The lower-side magnet fixing member 32 and upper-side magnet fixing member 34 are cylindrical shapes, having an outer diameter equivalent to that of the rotor magnet 33. The lower-side magnet fixing member 32 and upper-side magnet fixing member 34 are attached to the shaft 31, sandwiching the rotor magnet 33 from both sides in the axial direction. The upper-side magnet fixing member 34 has a minor radius portion 34a that is smaller in diameter than the lower side (rotor magnet 33 side).

The shaft 31 is disposed following the central axis J that extends vertically. The shaft 31 is rotatably supported around the axis (θz direction) by the lower-side bearing 52a and upper-side bearing 52b. The impeller 70 is attached to the end of the shaft 31 at the upper side (+Z side). The impeller 70 integrally rotates with the shaft 31 on the axis.

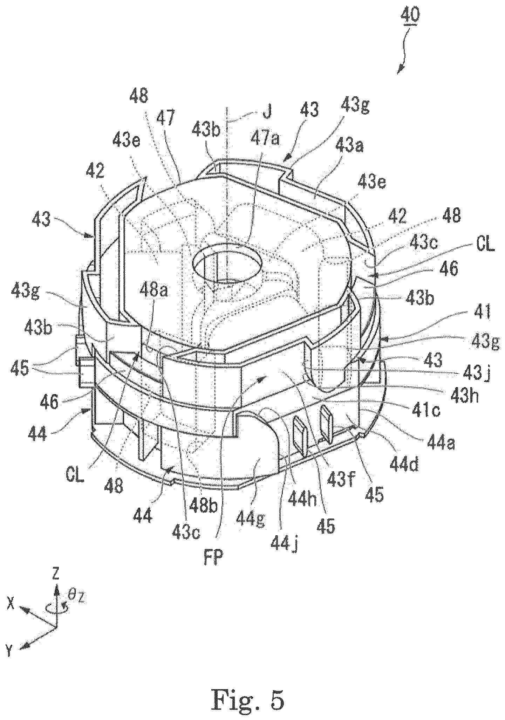

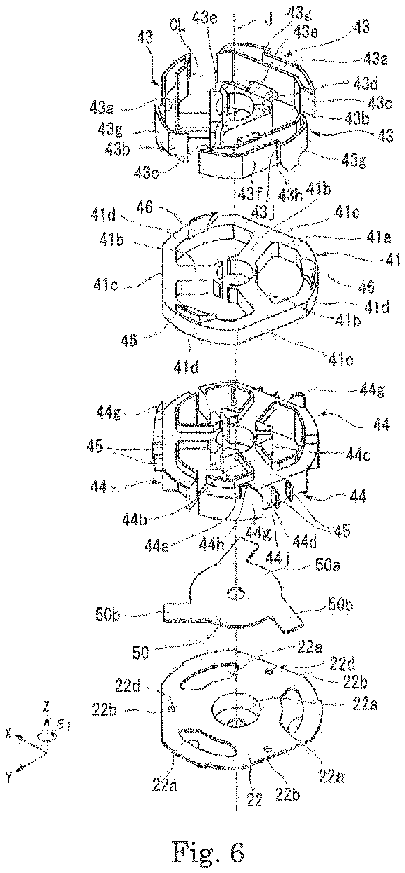

Fig. 5 is a perspective view of the stator 40 according to the present embodiment. Fig. 6 is a disassembled perspective view illustrating the stator 40, sensor board 50, and lower lid 22. Fig. 7 is a plane cross-sectional view of the motor 10.

The stator 40 is positioned on the outer side from the rotor 30 in the radial direction. The stator 40 encompasses the rotor 30 around the axis (θz direction). The stator 40 has a stator core 41, multiple (three) upper-side insulators 43, multiple (three) lower-side insulators 44, and coils 42, as illustrated in Fig. 5 and Fig. 6. The stator core 41 includes a core back portion 41a and multiple teeth portions 41b, as illustrated in Fig. 5. The stator 40 also has a molded portion (flow path forming member) 47 in which the coils 42 are embedded. That is to say, the stator 40 has the core back portion 41a, teeth portions 41b, insulators, coils 42, and flow path forming member. The insulators in the present embodiment correspond to the upper-side insulators 43 and lower-side insulators 44. Further, the flow path forming member corresponds to the molded portion 47.

The stator core 41 includes the ring-shaped core back portion 41a and multiple (three) teeth portions 41b extending inward in the radial direction from the core back portion 41a, as illustrated in Fig. 6. The core back portion 41a is ring-shaped around the central axis. The core back portion 41a has a configuration where linear portions 41c at three positions around the axis, and three arc portions 41d, are alternatingly positioned. The teeth portions 41b each extend inward in the radial direction from the inner peripheral faces of the linear portions 41c. The teeth portions 41b are disposed equidistantly following the circumferential direction. Inclined members 46 that guide exhaust air to the inner side of the stator 40 are each disposed at the upper faces of arc portions 41d of the core back portion 41a. The inclined members 46 each have a shape where the thickness progressively becomes smaller from the outer side in the radial direction toward the inner side in the radial direction.

The insulators (upper-side insulators 43 and lower-side insulators 44) cover at least part of the teeth portions 41b. Also, the coils 42 are wound on each of the teeth portions 41b via the insulators (upper-side insulators 43 and lower-side insulators 44).

The upper-side insulators 43 are insulating members covering part of the upper face and side faces of the stator core 41. The upper-side insulators 43 are provided corresponding to each of the three teeth portions 41b. The upper-side insulators 43 each have an upper-side outer peripheral wall portion 43a positioned at the upper side from the core back portion 41a, an upper-side inner peripheral wall portion 43e positioned at the upper side from the tip of the teeth portion 41b, and an upper-side insulating portion 43d that links the upper-side outer peripheral wall portion 43a and upper-side inner peripheral wall portion 43e in the radial direction, and that is positioned at the upper side of a portion of the teeth portion 41b where the coil 42 is wound.

The lower-side insulators 44 are insulating members covering part of the lower face and side faces of the stator core 41. The lower-side insulators 44 are provided corresponding to each of the three teeth portions 41b. The lower-side insulators 44 each have a lower-side outer peripheral wall portion 44a positioned at the lower side from the core back portion 41a, a lower-side inner peripheral wall portion 44c positioned at the lower side from the tip of the teeth portion 41b, and a lower-side insulating portion 44b that links the lower-side outer peripheral wall portion 44a and lower-side inner peripheral wall portion 44c in the radial direction, and that tis positioned at the lower side of a portion of the teeth portion 41b where the coil 42 is wound.

The upper-side insulators 43 and lower-side insulators 44 sandwich the teeth portions 41b of the stator core 41 in the vertical direction. The coils 42 are wound on the teeth portions 41b covered by the upper-side insulating portions 43d of the upper-side insulators 43 and the lower-side insulating portions 44b of the lower-side insulators 44.

The three upper-side outer peripheral wall portions 43a positioned above the core back portion 41a of the stator core 41 encompass the coils 42 from the outside in the radial direction, at the upper side from the stator core 41. The upper-side outer periphery wall portion 43a has a first side face 43b and second side face 43c at both ends thereof in the circumferential direction. The first side face 43b is an inclined face that is inclined as to the radial direction and faces the outer side in the radial direction. The second side face 43c is an inclined face that is inclined as to the radial direction and faces the inner side in the radial direction.

A flat face 43f and an upper-side inclined protruding portion 43g are provided in tandem in the circumferential direction at a portion of the outer peripheral faces of the upper-side outer peripheral wall portion 43a positioned above the linear portion 41c. The flat face 43f is positioned at a second side face 43c side, and the upper-side inclined protruding portion 43g is positioned at a first side face 43b. An arc-shaped face that is disposed following the inner peripheral face of the housing 20 is disposed between the flat face 43f and the second side face 43c. Also, the outer peripheral face of the upper-side inclined protruding portion 43g is an arc-shaped face following the inner peripheral face of the housing 20.

The flat face 43f extends in the axial direction, matching the outer peripheral face of the linear portion 41c of the stator core 41.

The upper-side inclined protruding portion 43g protrudes to the outer side in the radial direction as to the flat face 43f. The upper-side inclined protruding portion 43g also protrudes toward the lower side in the axial direction, and covers part of the linear portion 41c of the stator core 41 from the outer side in the radial direction. An axial-direction flat face 43j, and an upper-side guide inclined face 43h positioned at the lower side from the axial-direction flat face 43j, are provided on the side face of the upper-side inclined protruding portion 43g that is adjacent to the flat face 43f. The upper-side guide inclined face 43h gradually inclines in a direction facing the lower side the farther toward the lower side it is. The axial-direction flat face 43j and upper-side guide inclined face 43h are smoothly connected. The inclination direction of the upper-side guide inclined face 43h is the same direction as the rotational direction of the impeller. Accordingly, the swirling component of exhaust air flowing through air flow paths FP is smoothly directed toward the lower side by the upper-side guide inclined face 43h and a later-described lower-side guiding inclined face 44h. Thus, the venting efficiency of exhaust air flowing through the air flow paths FP can be improved.

The upper-side outer peripheral wall portions 43a that are adjacent in the circumferential direction are separated by predetermined gaps, as illustrated in Fig. 7. At adjacent upper-side outer peripheral wall portions 43a, the first side face 43b of one upper-side outer periphery wall portion 43a and the second side face 43c of the other upper-side outer periphery wall portion 43a are disposed facing each other in the circumferential direction. The degree of inclination of the first side face 43b as to the radial direction and the degree of inclination as to the radial direction of the second side face 43c differ. In further detail, the width in the circumferential direction of an opening portion 90 at the outer side in the radial direction of a gap CL formed between adjacent upper-side outer periphery wall portions 43a is narrower than the width in the circumferential direction of an opening portion 91 at the inner side in the radial direction.

Below the gaps CL are the inclined members 46 disposed above the core back portion 41a (see Fig. 6). The inclined members 46 are sandwiched between the first side faces 43b and second side faces 43c. The gaps CL are positioned on the inner side of the through holes 26 of the housing 20. The through holes 26 and the gaps CL are air flow paths that guide exhaust air flowing in from the outer side of the housing 20 to the inner side of the stator 40. The direction of inclination of the gaps CL as to the radial direction as viewed from above (direction from the outer side toward the inner side in the radial direction) matches the direction of flow of exhaust air discharged from the exhaust air guide member 60 in the circumferential direction. That is to say, this matches the rotational direction of the impeller 70.

Forming the opening portions 90 at the inlet side of the gaps CL relatively larger than the opening portions 91 at the outlet side, as illustrated in Fig. 7 enables more exhaust air to be suctioned into the gaps CL from the through holes 26, and relatively narrowing the width of the opening portions 91 at the outlet side enables the air discharged from the gaps CL to be caused to flow toward target positions (coils 42) more accurately.

The three lower-side outer peripheral wall portions 44a positioned at the lower side from the core back portion 41a encompass the coils 42 at the lower side of the stator core 41 from the outer side in the radial direction, as illustrated in Fig. 6. Although there are gaps between lower-side outer peripheral wall portions 44a that are adjacent in the circumferential direction, the lower-side outer peripheral wall portions 44a may be in contact with each other in the circumferential direction.

Of the outer peripheral faces of the lower-side outer peripheral wall portions 44a, the portions positioned at the lower side from the linear portions 41c of the core back portion 41a each have a flat face 44d and a lower-side inclined protruding portion 44g provided in tandem in the circumferential direction. Both sides in the circumferential direction of the region where the flat face 44d and lower-side inclined protruding portion 44g are provided, are provided with arc-shaped faces disposed following the inner peripheral face of the housing 20.

The flat face 44d extends in the axial direction matching the outer peripheral face of the linear portion 41c.

The lower-side inclined protruding portion 44g protrudes towards the outer side in the radial direction with regard to the flat face 44d. The lower-side inclined protruding portion 44g also covers part of the linear portion 41c of the stator core 41 protruding toward the upper side in the axial direction. An axial-direction flat face 44j, and a lower-side guiding inclined face 44h positioned at the upper side from the axial-direction flat face 44j, are disposed on a side face of the lower-side inclined protruding portion 44g adjacent to the flat face 44d. The lower-side guiding inclined face 44h gradually inclines in a direction facing toward the upper side the closer to the upper side it is. The axial-direction flat face 44j and lower-side guiding inclined face 44h are smoothly connected. The direction of inclination of the lower-side guiding inclined face 44h is the same direction as the rotational direction of the impeller.

The lower-side inclined protruding portions 44g of the lower-side insulators 44 and the upper-side inclined protruding portions 43g of the upper-side insulators 43 are disposed in a staggered manner in the circumferential direction and axial direction, across gaps, as illustrated in Fig. 5. The lower-side guiding inclined faces 44h and upper-side guide inclined faces 43h face each other across gaps. The gaps between the lower-side guiding inclined faces 44h and upper-side guide inclined faces 43h are part of the air flow paths FP between the stator 40 and housing 20. The swirling component of exhaust air flowing through the air flow paths FP is smoothly directed toward the lower side by the lower-side guiding inclined face 44h and upper-side guide inclined face 43h. Accordingly, the venting efficiency of exhaust air flowing through the air flow paths FP can be improved.

Multiple (two in the illustration) plate portions 45 that extend in the axial direction are provided to each flat face 44d. The plate portions 45 are erected approximately perpendicular to the flat face 44d. The tips of the plate portions 45 at the outer side in the radial direction reach the inner peripheral face of the housing 20. The plate portions 45 section the region of the air flow path FP between the lower-side outer peripheral wall portion 44a and the housing 20 into multiple regions in the circumferential direction.

The molded portion 47 functions as a flow path forming member. That is to say, the molded portion 47 configures exhaust guide holes 48 serving as flow paths. At least part of the molded portion 47 is positioned at the inner side in the radial direction of the core back portion 41a. The molded portion 47 is formed filling in a region of the stator 40 encompassed by the upper-side outer peripheral wall portions 43a of the upper-side insulators 43 and the lower-side outer peripheral wall portions 44a of the lower-side insulators 44, as illustrated in Fig. 5. Accordingly, the molded portion 47 covers the coils 42. The molded portion 47 is positioned between upper-side insulators 43, between lower-side insulators 44, and between coils 42, that are adjacent to each other. That is, in other words the molded portion 47 can be said to be connecting part of insulators or coils at one side in the circumferential direction and part of insulators or coils at the other side in the circumferential direction. Thus, the molded portion 47 is supported within the motor 10. The molded portion 47 reaches from the upper end of the upper-side insulators 43 to the lower end of the lower-side insulators 44. The molded portion 47 is also provided with a through hole 47a through which the rotor 30 is passed. The molded portion 47 encompasses and strongly supports the coils 42, and also integrally holds the upper-side insulators 43, lower-side insulators 44, stator core 41, and sensor board 50. Accordingly, the molded portion 47 can reduce vibrations generated from the stator 40.

The resin material of which the molded portion 47 is configured is not restricted, as long as it has insulating properties and the coils 42 can be covered and embedded. The molded portion 47 may also be configured of a hot-melt material with a low melting point. In a case of configuring the molded portion 47 from a hot-melt material, the molded portion 47 can be formed using a simple mold.

Three groove-shaped exhaust guide holes (flow paths) 48 that reach from the upper side to the lower end are provided on the outer peripheral face of the molded portion 47. The groove-shaped exhaust guide holes 48 are covered from the outer side in the radial direction by the by the core back portion 41a of the stator core 41, partway in the vertical direction. That is to say, the exhaust guide holes 48 pass through the inner side of the core back portion 41a in the radial direction. Also, at least part of the inner side face of the core back portion 41a in the radial direction is exposed to the exhaust guide holes 48. Thus, the core back portion 41a can be efficiently cooled. Note that part of the winding wires of the coils 42, upper-side insulators 43, and lower-side insulators 44 may be exposed to the exhaust guide holes 48. The exhaust guide holes 48 have upper openings 48a that open to the outer side in the radial direction, positioned at the upper side from the core back portion 41a, as illustrated in Fig. 2. The upper openings 48a open to the outer side in the radial direction. The exhaust guide holes 48 have inclined faces 48c that smoothly incline toward the lower side at the inner side of the upper openings 48a in the radial direction. The exhaust guide holes 48 also have lower openings 48b positioned at the lower end face of the molded portion 47, that open to the lower side. The lower openings 48b are positioned directly above the through holes 22a of the lower lid 22. That is to say, the molded portion 47 has the upper openings 48a opening at the upper side from the core back portion 41a and the lower openings 48b opening at the lower side from the core back portion 41a. The upper openings 48a open toward the outer side in the radial direction. Accordingly, air flowing from the outer side of the core back portion 41a can be efficiently guided into the stator 40. The lower openings 48b open toward the lower side in the axial direction. Accordingly, air heading toward the lower side in the axial direction can be discharged to the outer side of the housing 20 without changing the direction of the air flow, by the exhaust guide holes 48 formed in the axial direction. The exhaust guide holes 48 also connect the upper openings 48a and lower openings 48b. Accordingly, air is efficiently guided, and the inside of the stator 40 can be cooled, by the exhaust guide holes 48.

As illustrated in Fig. 5, the upper openings 48a of the exhaust guide holes 48 face the three gaps CL of the first side faces 43b and second side faces 43c of the upper-side insulators 43. The gaps CL are connected to the through holes 26 of the housing 20. Accordingly, the exhaust guide holes 48 connect to the through holes 26 of the housing 20. Thus, air flow paths can be configured further on the inner side from the core back portion 41a, and the inside of the stator 40 can be efficiently cooled. The width of the exhaust guide holes 48 matches the width of the opening portions 91 positioned on the inner side of the gaps CL in the radial direction, as illustrated in Fig. 7. Also, the exhaust guide holes 48 open from the outer peripheral face of the molded portion 47 and extend toward the lower side, as illustrated in Fig. 2. Note however, that the width of the exhaust guide holes 48 and the width of the opening portions 91 do not necessarily have to be the same width, and may be different widths. The molded portion 47 has first inclined faces 48d and second inclined faces 48e that make up the side walls on both sides of the exhaust guide holes 48 in the width direction. The first inclined faces 48d consecutively continue with the first side faces 43b of the upper-side insulators 43. That is to say, the first inclined faces 48d are positioned progressively further at the forward side in rotational direction of the impeller 70 as to the radial direction, the further toward the inner side in the radial direction. The second inclined faces 48e consecutively continue with the second side faces 43c of the upper-side insulators 43. That is to say, the second inclined faces 48e are positioned progressively further at the forward side in rotational direction of the impeller 70 as to the radial direction, the further toward the inner side in the radial direction. Accordingly, the molded portion 47 has inclined faces at the upper openings 48a that are positioned in the progressively further at the forward side in rotational direction of the impeller 70 as to the radial direction, the further toward the inner side in the radial direction. Now, these inclined faces correspond to the first inclined faces 48d and second inclined faces 48e. Accordingly, the exhaust air has a swirling component heading in the forward side in rotational direction of the impeller 70, so providing the first inclined faces 48d and second inclined faces 48e inclining person in the rotational direction, as side walls making up the exhaust guide holes 48, can raise the venting efficiency.

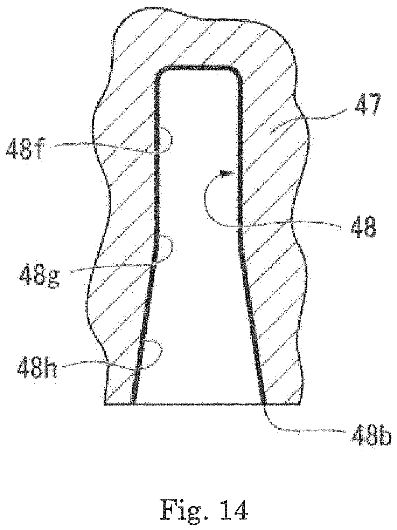

Exhaust air discharged from the gaps CL to the inner side of the stator 40 in the radial direction is guided into the exhaust guide holes 48 from the upper openings 48a, and the direction of flow is directed toward the lower side following the inclined faces 48c. Further, the exhaust air passes through the interior of the exhaust guide holes 48 and is discharged at the lower side of the stator 40 via the lower openings 48b. Providing the exhaust guide holes 48 in the molded portion 47 enables the exhaust air flowing among the coils 42 to be smoothly discharged toward the lower side without turbulence, whereby the venting efficiency can be raised. Note that in a case where the stator 40 does not have a molded portion 47, members having the exhaust guide holes 48 may be displaced between the coils 42. Also, the lower openings 48b may have a shape where the cross-sectional area of the flow path progressively increases toward the lower side, which will be described alter with reference to Fig. 14. According to this configuration, air passing through the exhaust guide holes 48 flows to the lower side more smoothly, so venting efficiency can be improved.

Fig. 14 is a cross-sectional view of an exhaust guide holes 48, taken along line XIV-XIV in Fig. 7.

The molded portion 47 has a linear portion 48f and a tapered portion 48h positioned vertically, as side walls making up an exhaust guide hole 48. The tapered portion 48h is positioned at the lower side of the linear portion 48f. A boundary portion 48g is provided between the linear portion 48f and tapered portion 48h. The linear portion 48f makes up a linear wall face in the vertical direction. Accordingly, the cross-sectional area of the exhaust guide hole 48 does not change along the vertical direction in the linear portion 48f. The tapered portion 48h is inclined as to the vertical direction, so that the opposing walls separate from each other the further toward the lower side. Accordingly, the flow-path cross-sectional area of the exhaust guide hole 48 progressively increases from the upper side toward the lower side at the tapered portion 48h. Thus, according to the present embodiment, the molded portion 47 has a tapered portion 48h where the flow-path cross-sectional area of the exhaust guide hole 48 progressively increases from the upper side toward the lower side. Accordingly, the static pressure of the exhaust air can be gradually reduced by the time of reaching the lower opening 48b, so occurrence of turbulence nearby the lower openings 48b can be suppressed, and the venting efficiency of the blower 1 can be increased.

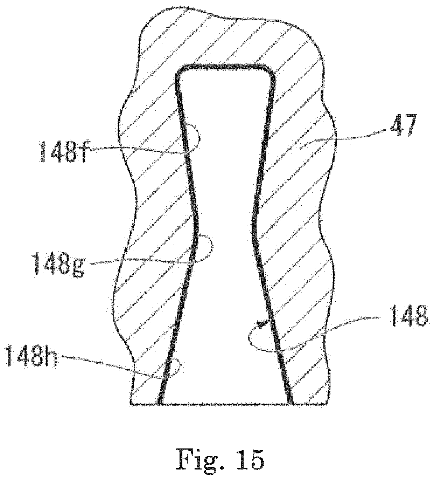

Fig. 15 is a cross-sectional view of an exhaust guide hole 148 according to another example that can be employed in the present embodiment. Note that Fig. 15 is a cross-sectional view corresponding to Fig. 14. The exhaust guide hole 148 illustrated in Fig. 15 has the same configuration as that of the above-described exhaust guide hole 48, except for the cross-sectional shape along the vertical direction.

The molded portion 47 in the example illustrated in Fig. 15 has a first tapered portion 148f and a second tapered portion 148h positioned vertically, as side walls making up an exhaust guide hole 148. The second tapered portion 148h is positioned at the lower side of the first tapered portion 148f. A boundary portion 148g is provided between the first tapered portion 148f and second tapered portion 148h.

The first tapered portion 148f is inclined as to the vertical direction, so that the opposing walls come closer to each other the further toward the lower side. Accordingly, the flow-path cross-sectional area of the exhaust guide hole 148 progressively decreases from the upper side toward the lower side at the first tapered portion 48f. Thus, the molded portion 47 has a first tapered portion 148f where the flow-path cross-sectional area of the exhaust guide hole 148 progressively decreases from the upper side toward the lower side.

On the other hand, the second tapered portion 148h is inclined as to the vertical direction, so that the opposing walls separate from each other the further toward the lower side. Accordingly, the flow-path cross-sectional area of the exhaust guide hole 148 progressively increases from the upper side toward the lower side at the second tapered portion 148h. Thus, the molded portion 47 has a second tapered portion 148h positioned at the lower side from the first tapered portion 148f, where the flow-path cross-sectional area of the exhaust guide hole 148 progressively increases from the upper side toward the lower side.

The exhaust guide hole 148 is narrowest at the boundary portion 148g. Air that has flowed into the exhaust guide hole 148 is narrowed down due to increased flow-path resistance at the first tapered portion 148f, and thereafter passes the boundary portion 148g and flows into the second tapered portion 148h. The flow-path cross-sectional area gradually increases for the air that has flowed into the second tapered portion 148h, when heading toward the lower side. Accordingly, pressure of the air is gradually release, the flow gradually becomes gentle, and discharge is performed without separation. Accordingly, air blowing efficiency is improved.

The sensor board 50 is disposed between the stator 40 and the lower lid 22, as illustrated in Fig. 2 and Fig. 6. The sensor board 50 has a circular ring-shaped main unit portion 50a, and three protruding portions 50b that protrude toward the outer side from the outer edge of the main unit portion 50a, in a direction inclined as to the radial direction. The main unit portion 50a has a through hole through which the shaft 31 is passed. The sensor board 50 is fixed to the lower-side insulators 44.

The sensor board 50 has at least three rotary sensors 51 mounted thereupon. The rotary sensors 51 are Hall elements, for example. The sensor board 50 may be electrically connected to the coils 42. In this case, a driving circuit that outputs driving signals to the coils 42 may be mounted on the sensor board 50.

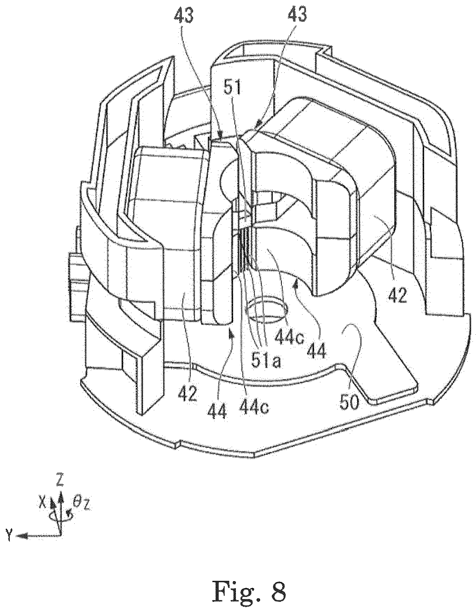

Fig. 8 is an explanatory diagram illustrating a mounting arrangement of a rotary sensor 51.

The rotary sensors 51 are disposed interposed between tip portions of lower-side inner peripheral wall portions 44c that are adjacent in the circumferential direction, as illustrated in Fig. 7 and Fig. 8. The three rotary sensors 51 are equidistantly disposed every 120° in the circumferential direction. The faces of the rotary sensors 51 on the inner side in the radial direction face the rotor magnet 33. The rotor magnet 33 is disposed at the center portion of the rotor 30 in the axial direction in the case of the present embodiment. Accordingly, the rotary sensors 51 are connected to the sensor board 50 by leads 51a of a length corresponding to the length from the sensor board 50 to the rotor magnet 33 in the axial direction.

A mechanism that supports the rotary sensors 51 may be provided to the tip portion of the lower-side inner peripheral wall portions 44c. For example, recesses may be provided into which the rotary sensors 51 are inserted, thereby suppressing movement of the rotary sensors 51 in the radial direction. Alternatively, the rotary sensors 51 may be fixed to the lower-side inner peripheral wall portions 44c by snap-fitting or the like.

The lower lid 22 is attached to the opening end 20a of the housing 20 accommodating the stator 40 and sensor board 50, as illustrated in Fig. 4. The three through holes 22a of the lower lid 22 are at least partly positioned on the outer side in the radial direction from the outer peripheral end of the main unit portion 50a of the sensor board 50, as illustrated in Fig. 2. The through holes 22a serve as second vents 97 that vent the exhaust air that has passed through the exhaust guide holes 48 of the molded portion 47 toward the lower side of the motor 10.

The notches 22b of the lower lid 22 are disposed approximately matching the linear portions 41c of the stator core 41, the flat faces 43f of the upper-side insulators 43, and the flat faces 44d of the lower-side insulators 44, as viewed in the axial direction. The lower-side openings 24 at the lower face of the motor 10 serve as first vents 96 that discharge exhaust air that has passed through the air flow paths FP between the stator 40 and housing 20, as illustrated in Fig. 2.

### [Exhaust Air Guide Member, Impeller, and Impeller Housing]

Next, the exhaust air guide member 60, impeller 70, and impeller housing 80 will be described.

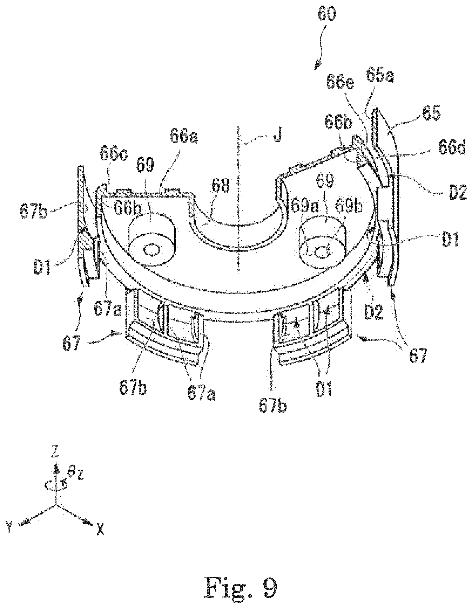

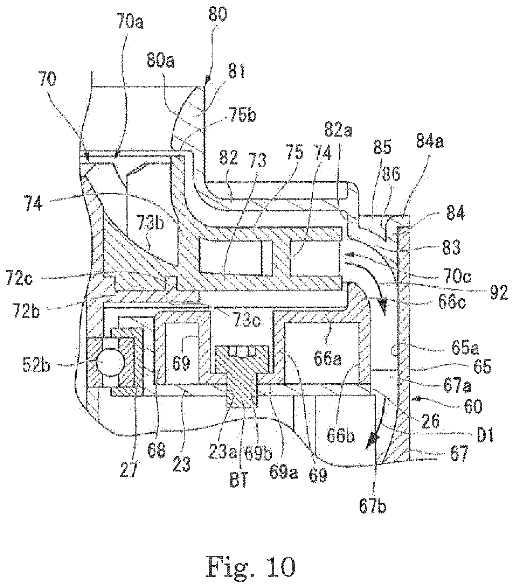

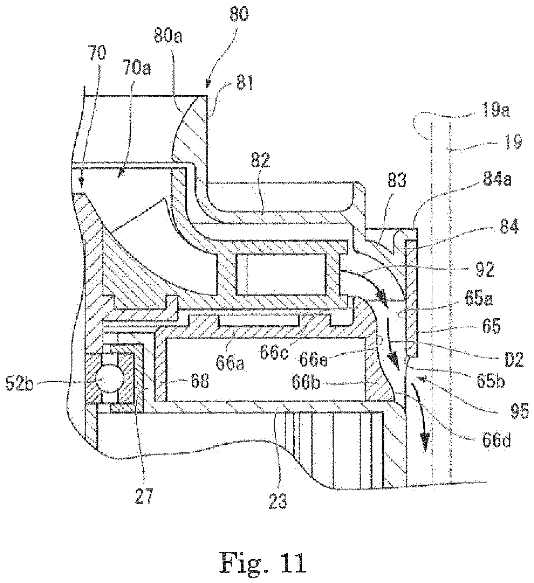

Fig. 9 is a partial cutaway perspective view of the exhaust air guide member 60 from below. Fig. 10 and Fig. 11 are enlarged cross-sectional views illustrating part of the impeller 70, exhaust air guide member 60, and impeller housing 80. Note that Fig. 10 illustrates a first guide path D1 that will be described later, and Fig. 11 illustrates a second guide path D2 that will be described later.

### <Exhaust Air Guide Member>

The exhaust air guide member 60 is attached to the housing 20 of the motor 10. The exhaust air guide member 60 has a disc-ring-shaped supporting member 66a, a ring-shaped protruding portion 66c protruding toward the upper side from the outer peripheral edge of the supporting member 66a, a cylindrical partitioning ring 66b extending toward the lower side from the outer peripheral edge of the supporting member 66a, an outer periphery cylindrical portion 65 that encompasses the partitioning ring 66b from the outer side in the radial direction, an multiple (six in the illustration) inner guide portions 67 extending toward the lower side from the lower end of the outer periphery cylindrical portion 65.

The supporting member 66a has a cylindrical attachment ring 68 that extends from the lower face of the middle portion toward the lower side, and three columnar protruding portions 69 that protrude from the lower face of the supporting member 66a toward the lower side, as illustrated in Fig. 9.

The three columnar protruding portions 69 had the same diameters and heights, and are equidistantly disposed every 120° in the circumferential direction. The columnar protruding portions 69 are hollow in the present embodiment, and each have a protruding portion through hole 69b at the middle of an end face 69a at the lower side that passes through in the axial direction.

The upper-side bearing holding portion 27 of the housing 20 is inserted into the attachment ring 68 of the exhaust air guide member 60, as illustrated in Fig. 10. The lower face of the attachment ring 68 of the exhaust air guide member 60 and the end face 69a at the lower side of the columnar protruding portions 69 come into contact with the upper face of the upper lid portion 23 of the housing 20. The exhaust air guide member 60 and the motor 10 are fastened by bolts BT passed through the protruding portion through holes 69b of the columnar protruding portions 69 and screw holes 23a in the upper lid portion 23.

The partitioning ring 66b and outer periphery cylindrical portion 65 face each other in the radial direction across a gap. The gap between the partitioning ring 66b and outer periphery cylindrical portion 65 make up part of first guide paths D1 that guide exhaust air into the motor 10, and part of second guide paths D2 that discharge exhaust air to the periphery of the motor 10. The first guide paths D1 are positioned at locations in the outer peripheral direction where the inner guide portions 67 have been provided, and the second guide paths D2 are positioned between the inner guide portions 67 in the circumferential direction. Six each of the first guide paths D1 and second guide paths D2 are provided along the circumferential direction in the present embodiment.

The multiple inner guide portions 67 each fit to the through holes 26 or through holes 25 of the housing 20, as illustrated in Fig. 1. The outer peripheral faces of the inner guide portions 67 extend in the axial direction matching the outer peripheral face of the outer periphery cylindrical portion 65, as illustrated in Fig. 9 and Fig. 10. The inner peripheral faces 67b of the inner guide portions 67 are inclined faces inclined toward the inner side in the radial direction, the further toward the lower side they are. The inner side of the inner peripheral faces 67b of the inner guide portions 67 serve as first guide paths D1 to guide exhaust air discharged from the impeller 70 to the through holes 25 and 26 at the inner side in the radial direction. The inner peripheral faces 67b of the inner guide portions 67 also is provided with multiple stator vanes 67a extending in the vertical direction in the form of ribs. The stator vanes 67a link the partitioning ring 66b and the inner guide portion 67 in the radial direction. The exhaust air passing through the first guide paths D1 is rectified between the stator vanes 67a and is efficiently guided to the through holes 25 and 26. Note that the stator vanes 67a may be included in the rotational direction of the impeller 70. In this case, exhaust air including the swirling component in the rotational direction of the impeller 70 can be guided to the through holes 25 and 26 even more efficiently.

The second guide paths D2 that guide exhaust air discharged from the impeller 70 to the outer side in the radial direction and discharge to the outer side of the motor 10 are provided between the inner guide portions 67 in the circumferential direction, as illustrated in Fig. 9. The second guide paths D2 are positioned between an outer peripheral face 66e of the partitioning ring 66b and an inner peripheral face 65a of the outer periphery cylindrical portion 65, as illustrated in Fig. 11. Third vents 95 are provided at the lower end of the second guide paths D2. The third vents 95 turn the exhaust air that has passed through the second guide paths D2 downward, and discharge to the outer side of the motor 10. This exhaust air flows between the outer peripheral face of the motor 10 and an inner peripheral face 19a of a casing 19 that accommodates the motor 10, and finally is discharged from a later-described final vent 17b (see Fig. 2).

The outer peripheral face 66e of the partitioning ring 66b has an inner-side inclined portion 66d that progressively hangs out toward the outer side in the radial direction the closer to the lower side it is. On the other hand, the inner peripheral face 65a of the outer periphery cylindrical portion 65 has an outer-side inclined portion 65b where the thickness of the outer periphery cylindrical portion 65 is thinner at the lower end. Due to these inner-side inclined portion 66d and outer-side inclined portion 65b being provided, the second guide paths D2 travel to the outer side in the radial direction while maintaining the width in the radial direction as they head toward the lower side. The cross-sectional area of the second guide paths D2 in places perpendicular to the axial direction gradually increases the closer to the third vents 95. Accordingly, the discharge sound of air being discharged from the third vents 95 can be reduced. Also, the discharge efficiency at the time of air being discharged from the third vents 95 is improved.

### <Impeller>

The impeller 70 is attached to the shaft 31 at the upper side from the stator 40. The impeller 70 discharges fluid suctioned from an intake port 70a that is opened toward the upper side, toward the outer side in the radial direction via internal flow paths, as illustrated in Fig. 2. The impeller 70 has an impeller main body 71 and an impeller hub 72.

The impeller main body 71 has a base portion 73, multiple moving blades 74, and a shroud 75. The base portion 73 is disc-shaped, and has a through hole 73a passing through in the axial direction at the middle portion. The perimeter of the through hole 73a of the base portion 73 is an inclined portion 73b that has a conical face shape extending at the upper side. The moving blades 74 are plate-shaped members curved in the circumferential direction, that extend from the inner side in the radial direction toward the outer side on the upper face of the base portion 73. The moving blades 74 are disposed erected following the axial direction. The shroud 75 is a cylindrical shape that tapers toward the upper side in the axial direction. An opening portion at the middle of the shroud 75 is the intake port 70a of the impeller 70. The base portion 73 and shroud 75 are linked by the moving blades 74.

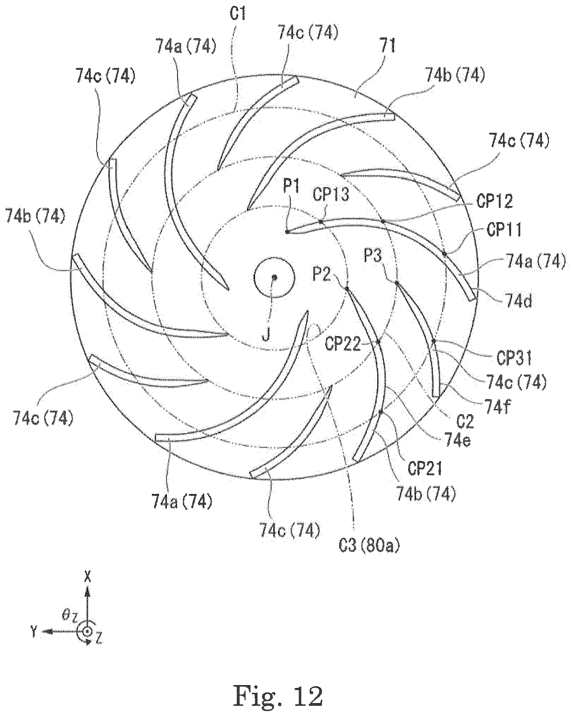

Fig. 12 is a plan view of the moving blades 74 of the impeller 70.

The multiple moving blades 74 are disposed following the circumferential direction (θz direction) on the upper face of the base portion 73, as illustrated in Fig. 12. The moving blades 74 are erected perpendicularly from the upper face of the base portion 73 following the axial direction, as illustrated in Fig. 2.

In the present embodiment, three types of moving blades 74 are disposed, with the same types of moving blades being equidistantly disposed in the circumferential direction. The multiple moving blades 74 in the present embodiment include multiple (three) first moving blades 74a, multiple (three) second moving blades 74b, and multiple (six) third moving blades 74c. The three first moving blades 74a are disposed at equidistantly every 120° in the circumferential direction. The second moving blades 74b are each disposed between first moving blades 74a adjacent in the circumferential direction. The three second moving blades 74b are also disposed equidistantly every 120° in the circumferential direction. The third moving blades 74c are each disposed between first moving blades 74a and second moving blades 74b adjacent in the circumferential direction. The six third moving blades 74c are disposed equidistantly every 60° in the circumferential direction.

The moving blades 74 extend on the upper face of the base portion 73 having a curvature in plan view (XY plane view). One end of the moving blades 74 is positioned on an outer edge of the base portion 73. The other end of each moving blade 74 is positioned on the inner side of the outer edge of the base portion 73 in the radial direction.

That is to say, the end portions of each of the first moving blades 74a, the second moving blades 74b, and the third moving blades 74c, at the outer side in the radial direction, are all positioned on the outer edge of the base portion 73. On the other hand, end portions P1 of the first moving blades 74a on the inner side are positioned closest to the center of the base portion 73. End portions P2 of the second moving blades 74b on the inner side are positioned on the outer side in the radial direction from the end portions P1 of the first moving blades 74a. End portions P3 of the third moving blades 74c on the inner side are positioned further on the outer side in the radial direction from the end portions P2 of the second moving blades 74b.

The first moving blades 74a, the second moving blades 74b, and the third moving blades 74c, each have a shape that is curved like a bow in a counterclockwise direction.

The first moving blades 74a are each formed of four arcs that are different in radius of curvature. A projecting blade face 74d of the first moving blades 74a has three inflection points CP11, CP12, and CP13, in the longitudinal direction.

The second moving blades 74b are each formed of three arcs that are different in radius of curvature. A projecting blade face 74e of the second moving blades 74b has two inflection points CP21 and CP22 in the longitudinal direction.

The third moving blades 74c are each formed of two arcs that are different in radius of curvature. A projecting blade face 74f of the third moving blades 74c has one inflection point CP31 in the longitudinal direction.

In the present embodiment, the inflection point CP11 of each first moving blade 74a, the inflection point CP21 of each second moving blade 74b, and the inflection point CP31 of each third moving blade 74c, are each disposed at the same radius position C1 on the base portion 73. Further, the radius of curvature of a portion of each first moving blade 74a that is further on the outer side of the radial position C1, the radius of curvature of a portion of each second moving blade 74b that is further on the outer side of the radial position C1, and the radius of curvature of a portion of each third moving blade 74c that is further on the outer side of the radial position C1, are the same as each other.

Next, the inflection point CP12 of each first moving blade 74a, the inflection point CP22 of each second moving blade 74b, and the end portion P3 of each third moving blade 74c are each disposed at the same radius position C2 on the base portion 73. Further, the radius of curvature of a portion of each first moving blade 74a that is disposed between the radial position C1 and the radial position C2, the radius of curvature of a portion of each second moving blade 74b disposed between the radial position C1 and the radial position C2, and the radius of curvature of a portion of each third moving blade 74c that is disposed between the radial position C1 and the radial position C2, are the same as each other.

Next, the inflection point CP13 of each first moving blade 74a and the end portion P2 of each second moving blade 74b are disposed at the same radius position C3 on the base portion 73. Further, the radius of curvature of a portion of each first moving blade 74a that is disposed between the radial position C2 and the radial position C3 and the radius of curvature of a portion of each second moving blade 74b disposed between the radial position C2 and the radial position C3 are the same as each other.

The radius of curvature of the blade faces 74d to 74f of the moving blades 74 (74a through 74c) in the present embodiment are different for each region of the impeller 70 in the radial direction. Meanwhile, portions of different types of moving blades 74 (the first moving blades 74a through third moving blades 74c) that belong to the same region in the radial direction are set to have the same radius of curvature.

In the present embodiment, the radial position C3 agrees with the intake port 80a of the impeller housing 80 as seen in the axial direction. Accordingly, only the portions of the first moving blades 74a further on the inner side than the inflection point CP13 are disposed inward of the intake port 80a.

The impeller hub 72 includes a cylindrical portion 72a that extends in the axial direction, a disc-shaped flange portion 72b that extends outwards in the radial direction from the lower portion of the outer face of the cylindrical portion 72a, and multiple projecting portions 72c that protrude upwards from the upper face of the flange portion 72b. The cylindrical portion 72a includes a tapered inclined face portion 72d that becomes tapered toward the tip portion at the upper side.

The impeller hub 72 is attached to the impeller main body 71 by inserting the cylindrical portion 72a into the through hole 73a of the base portion 73 from the lower side. The cylindrical portion 72a may be press-fitted into the through hole 73a, or may be fixed using an adhesive agent or the like. The flange portion 72b of the impeller hub 72 supports the impeller main body 71 from the lower side. The projecting portions 72c on the flange portion 72b are fitted into recesses 73c on the lower face of the base portion 73. Fitting the projecting portions 72c into the recesses 73c suppresses relative movement of the impeller main body 71 and the impeller hub 72 in the circumferential direction.

Due to the impeller hub 72 including the flange portion 72b, the flange portion 72b can support the impeller main body 71 over a wide area in the radial direction from below. Accordingly, the impeller 70 can be held in a stable manner, and stability at the time of high-speed rotation is increased.

The inclined face portion 72d at the tip of the cylindrical portion 72a of the impeller hub 72 and the inclined face portion 73b of the base portion 73 are smoothly connected to each other in the vertical direction in the impeller 70. The inclined face portion 72d and the inclined face portion 73b make up a ring-shaped inclined face 70b that guides fluid suctioned from the intake port 70a of the impeller 70 to the outer side in the radial direction.

Configuring the ring-shaped inclined face 70b from the impeller main body 71 and the impeller hub 72 enables the maximum height of the ring-shaped inclined face 70b to be increased by increasing the length of the cylindrical portion 72a (inclined face portion 72d) without increasing the height of the inclined face portion 73b of the base portion 73. Accordingly, a ring-shaped inclined face 70b having a preferable shape can be realized while suppressing increase in thickness of the base portion 73.

The impeller hub 72 is preferably made of metal. In this case, the shaft 31 and the impeller 70 can be strongly linked to each other. Accordingly, the impeller 70 can be rotated at high speeds in a stable manner. Moreover, a metal face can be used as the inclined face portion 72d, and accordingly the surface of the upper tip of the ring-shaped inclined face 70b can be smoothed.

The impeller 70 is fixed to the shaft 31 by fitting the upper end portion of the shaft 31 into the cylindrical portion 72a of the impeller hub 72 from the lower side. As illustrated in Fig. 2, the impeller 70 connected to the shaft 31 is disposed at the inner side of the ring-shaped protruding portion 66c of the exhaust air guide member 60. Accordingly, the protruding portion 66c is disposed nearby a vent 70c of the impeller 70.

The protruding portion 66c guides exhaust air discharged from the impeller 70 to the lower side, along with a later-described exhaust air guide 83 of the impeller housing 80. In the present embodiment, the outer peripheral face of the ring-shaped protruding portion 66c is an inclined face that is inclined downwards the further on the outer side in the radial direction it is. The outer peripheral face of the protruding portion 66c is a smooth convex curved face toward the outer side.

The lower end of the outer peripheral face of the protruding portion 66c is smoothly connected to the outer peripheral face of the cylindrical partitioning ring 66b. Accordingly, the inclination angle as to a direction perpendicular to the axial direction is approximately 90° at the lower end of the protruding portion 66c. The upper end of the protruding portion 66c is positioned on the immediately outer side in the radial direction of the outer edge of the base portion 73 of the impeller 70. The upper end of the protruding portion 66c is positioned at the upper side from the lower face of the base portion 73, but is positioned at the lower side from the upper face of the outer edge of the base portion 73.

In the blower 1 according to the present embodiment, air discharged from the impeller 70 can be smoothly guided downwards without turbulence in the flow, due to the protruding portion 66c having the above-described shape and placement. At the lower end of the vent 70c of the impeller 70, air is discharged from the outer edge of the base portion 73 in a direction approximately perpendicular to the axial direction. The upper end of the protruding portion 66c is at a position lower than the upper face of the base portion 73 in the present embodiment, so the discharged air is guided following the other peripheral face of the protruding portion 66c without colliding with the protruding portion 66c. Accordingly, air can be conveyed efficiently.

### <Impeller Housing>

The impeller housing 80 has the intake port 80a on the upper side, and has the shape of a cylinder that is tapered toward the upper side in the axial direction, as illustrated in Fig. 2. The impeller housing 80 has an intake guide portion 81 positioned at the opening end of the intake port 80a, an impeller housing main body 82 that accommodates the impeller 70, an exhaust air guide 83 extending from the outer peripheral edge of the impeller housing main body 82 toward the outer side in the radial direction and toward the lower side, in a form like a skirt, and an outer periphery attachment ring 84 that extends toward the upper side from the outer peripheral edge of the exhaust air guide 83.

The impeller housing main body 82 has a cross-sectional shape modeled after that of the shroud 75 of the impeller 70. The inner face (lower face) of the impeller housing main body 82 faces the outer face (upper face) of the shroud 75 across a uniform spacing.

The ring-shaped intake guide portion 81 that protrudes toward the inner side in the radial direction is positioned on the upper end of the inner peripheral side of the impeller housing main body 82. The intake guide portion 81 covers an upper end face 75b of the shroud 75 from above, as illustrated in Fig. 10. A narrow gap runs in the radial direction between the lower face of the intake guide portion 81 and the upper end face 75b of the shroud 75.

A peripheral edge bend portion 82a, bent to wrap around the outer peripheral end of the shroud 75, is provided to the end of the impeller housing main body 82 at the outer peripheral side. The peripheral edge bend portion 82a extends to the lower side and encompasses the outer side end face of the shroud 75 from the outer side in the radial direction. A narrow gap extending to the upper side in the axial direction runs between the inner peripheral face of the peripheral edge bend portion 82a and the outer side end face of the shroud 75.

The exhaust air guide 83 makes up an exhaust air flow path 92 that guides exhaust air, discharged to the outer side in the radial direction from the impeller 70, toward the lower side, as illustrated in Fig. 10 and Fig. 11. The inner peripheral face of the exhaust air guide 83 smoothly inclines from a direction perpendicular to the axial direction toward the axial direction, from the upper end toward the lower end. The inner peripheral face of the exhaust air guide 83 is gently connected and the lower end to the inner peripheral face 65a of the outer peripheral cylindrical portion 65 of the exhaust air guide member 60, thereby making up a wall face at the outer peripheral side of the exhaust air flow path 92.

The outer periphery attachment ring 84 is cylindrical in shape. The outer periphery attachment ring 84 has a flange portion 84a extending from the upper end toward the outer side in the radial direction. The outer peripheral face of the outer periphery attachment ring 84 fits to the inner peripheral face of the outer periphery cylindrical portion 65 of the exhaust air guide member 60. The flange portion 84a also comes into contact with the upper end of the outer periphery cylindrical portion 65 and positions the impeller housing 80 as to the exhaust air guide member 60 in the vertical direction.

A recess 86 that extends in the circumferential direction is provided on the upper face of the exhaust air guide 83. The recess 86 is made up of the peripheral edge bend portion 82a, exhaust air guide 83, and outer periphery attachment ring 84. The thickness of the exhaust air guide 83 is made uniform due to the recess 86 having been provided to the impeller housing 80. Moreover, ribs 85 that connect the outer periphery attachment ring 84 to the peripheral edge bend portion 82a of the impeller housing main body 82 in the radial direction are provided in the recess 86.

The impeller housing 80 is produced by molding. That is to say, the impeller housing 80 is manufactured by injecting a material in a fluid state into a cavity between two or more molds, which is then hardened. The impeller housing 80 according to the present embodiment is made of a resin material, and is fabricated by injection molding. In a case of forming the impeller housing 80 of an aluminum alloy, the impeller housing 80 is fabricated by aluminum die-casting. The molded article manufactured by molding may exhibit sink marks on the surface of thick portions, due to shrinkage when the material hardens, and this may deteriorate dimensional precision. In the case of performing aluminum die-casting, air pockets (cavities) may occur within thick portions, and this may deteriorate strength.

The recess 86 is provided between the outer periphery attachment ring 84 and the peripheral edge bend portion 82a of the impeller housing main body 82 of the impeller housing 80 according to the present embodiment. Thus, the thickness of the exhaust air guide 83 can be made uniform in the impeller housing 80, thereby suppressing occurrence of sink marks from occurring on the periphery of the exhaust air guide 83. In the same way, air pockets can be suppressed from occurring within the exhaust air guide 83 of the impeller housing 80. Further, the ribs 85 are provided to the recess 86 of the impeller housing 80 according to the present embodiment, so rigidity of the outer periphery attachment ring 84 as to the impeller housing main body 82 can be increased. Accordingly, the impeller housing 80 can be strongly fixed to the exhaust air guide member 60 at the outer periphery attachment ring 84.

### [Board Case, Control Board]

### <Board Case>

The board case 15 is attached to the lower side of the motor 10, and encompasses the control board 11, as illustrated in Fig. 1 and Fig. 2. The board case 15 has a disc-shaped base wall 16, and a cylindrical portion 17 that extends upward from the outer edge of the base wall 16. The cylindrical portion 17 is provided with the final vent 17b that passes through the board case 15 in the radial direction so the inner side and the outer side communicate. The final vent 17b merges and discharges air discharged from the vents (first vents 96, second vents 97, and third vents 95) .

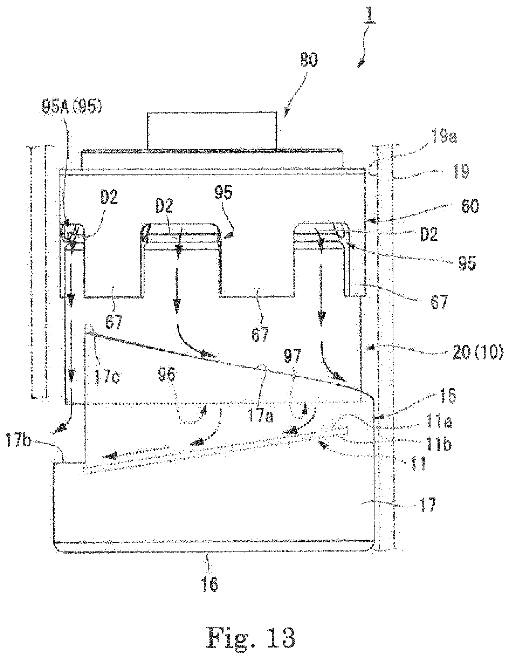

Fig. 13 is a side view of the motor 10.

An upper end face 17a of the cylindrical portion 17 is inclined in a spiral form centered on the central axis J, as illustrated in Fig. 1 and Fig. 13. The upper end face 17a progressively inclines in the same direction as the rotation direction of the impeller 70 toward the lower side. The final vent 17b is positioned at the lower end side of the spiral of the upper end face 17a. Exhaust air discharged from the third vents 95 of the exhaust air guide member 60 flows downwards between the outer peripheral face of the motor 10 and the inner peripheral face 19a of the casing 19 accommodating the motor 10. Upon reaching the upper end face 17a of the cylindrical portion 17, this exhaust air follows the incline of the upper end face 17a, swirls and reaches the final vent 17b, and is discharged. The upper end face 17a guides exhaust air including the swirling component that is discharged obliquely downwards from the third vents 95 to the final vent 17b without changing the direction of flow at an abrupt angle, so deterioration of venting efficiency can be reduced.

At least one third vent 95 of the multiple third vents 95 is positioned directly above the final vent 17b. The third vent 95 that is positioned directly above the final vent 17b will be referred to as a direct-above vent 95A here. An uppermost end 17c of the upper end face 17a is positioned at the lower side of the inner guide portion 67 in the present embodiment. Accordingly, exhaust air discharged from the direct-above vent 95A is not guided to the upper end face 17a, but rather passes over a distance that is shorter than being guided to the upper end face 17a and is discharged from the final vent 17b, and thus can improve the discharge efficiency from the direct-above vent 95A.

The upper end face 17a in the present embodiment has been exemplarily illustrated with regard to a case where the inclination along the circumferential direction is constant. However, the upper end face 17a may be an inclined face of which the inclination changes along the circumferential direction. In this case, the upper end face 17a preferably is an inclined face where the angle of inclination gradually becomes gentler from the upper side toward the lower side. For example, the upper end face 17a may be a curved face that is convex toward the lower side, with the radial center of curvature of the curved face that the upper end face makes up being positioned at the upper side from the upper end face 17a. Accordingly, exhaust air flowing toward the lower side may be made to gradually swirl following the upper end face 17a, and be guided to the final vent 17b, whereby discharge efficiency can be improved.

### <Control Board>

The control board 11 is connected to coil lines extending from the coils 42, and the sensor board 50, and controls the motor 10. The control board 11 is attached to the lower side of the motor 10 in a stage of being inclined as to the lower lid 22, via multiple (three in the present embodiment) post-shaped members 13 fixed to the lower lid 22, as illustrated in Fig. 2. The post-shaped members 13 are fixed by screwing to screw holes 22d in the lower lid 22. The multiple post-shaped members 13 each have different heights. Also, inclined faces are provided to the lower side end faces of the post-shaped members 13. The control board 11 is fixed by screwing to the lower side end faces of the post-shaped members 13 via spacers 13a.

The control board 11 is inclined toward the final vent 17b of the board case 15, within the board case 15. That is to say, the lowest point of the control board 11 is positioned toward the final vent 17b side.

Exhaust air that has passed through the interior of the motor 10 and been discharged to the lower side of the motor 10 from the first vents 96 and second vents 97 strikes the control board 11 and cools the control board 11. Further, exhaust air that has struck an upper face 11a of the control board 11 is smoothly discharged to the final vent 17b following the inclination of the control board 11. That is to say, venting efficiency can be increased due to the control board 11 being inclined toward the final vent 17b. Further, the projection area of the control board 11 as viewed from the axial direction can be reduced by disposing the control board 11 in an inclined manner. Accordingly, the gap between the outer edge of the control board 11 and the inner peripheral face of the cylindrical portion 17 of the board case 15 can be increased to let exhaust air flow to a lower face 11b side of the control board 11. Accordingly, even in a case where mounted parts that generate a great amount of heat, such as capacitors or the like, are mounted on the lower face 11b of the control board 11, these can be efficiently cooled.

The position of the control board 11 in the axial direction preferably is close, within a range where there is no interference between the upper face 11a of the control board 11 and the mounted parts mounted on the upper face 11a, and the lower lid 22 of the motor 10. Accordingly, not only is the cooling efficiency of the control board 11 improved, but also the effect of the exhaust air being guided to the final vent 17b due to the inclination of the control board 11 can be increased.

### <Air Blowing Operations>

The blower 1 according to the present embodiment draws air onto the impeller 70 from the intake port 80a by rotating the impeller 70 by the motor 10, and discharges air to the outer side in the radial direction via air flow paths within the impeller 70, as illustrated in Fig. 2. The exhaust air discharged from the impeller 70 passes through the exhaust air flow path 92 and flows into the exhaust air guide member 60. The exhaust air flow path 92 is positioned between the inner peripheral face of the exhaust air guide 83 of the impeller housing 80 and the outer peripheral face of the protruding portion 66c, and directs exhaust air, discharged toward the outer side in the radial direction by the impeller 70, toward the lower side. The exhaust air flowing toward the lower side of the exhaust air flow path 92 is branched into and flows through first guide paths D1 and second guide paths D2 alternately positioned in the circumferential direction of the exhaust air guide member 60.

Exhaust air passing through the first guide paths D1 is guided further to the inner side in the radial direction than the inner peripheral face 67b of the inner guide portion 67, and is rectified by the stator vanes 67a and flows to the interior of the motor 10 through the through holes 25 and 26, as illustrated in Fig. 10.

The exhaust air that has flowed into the interior of the motor 10 via the through holes 25 flows into the air flow paths FP between the stator 40 and housing 20 illustrated in Fig. 7. The exhaust air flows toward the lower side in the air flow paths FP. The upper-side inclined protruding portions 43g of the upper-side insulators 43 and the lower-side inclined protruding portions 44g of the lower-side insulators 44 direct the swirling component of the exhaust air toward the lower side within the air flow paths FP, as illustrated in Fig. 5. The outer peripheral faces of the linear portions 41c (stator core 41) are exposed within the air flow paths FP, and are cooled by the exhaust air. Multiple plate portions 45 are disposed within the air flow paths FP, and rectify the exhaust air flowing through the air flow paths FP. Exhaust air that has passed through the air flow paths FP is discharged downwards from the lower-side openings 24 serving as the first vents 96.

The exhaust air that has flowed into the motor 10 via the through holes 26 flows to the inner side of the stator 40 via the gaps CL as illustrated in Fig. 7. The first side faces 43b and second side faces 43c and inclined members 46 encompassing the gaps CL guide the exhaust air passing through the gaps CL to the exhaust guide holes 48 of the molded portion 47. According to this configuration, the coils 42, which are heat generators in the motor 10, can be cooled. In addition, the exhaust air can be efficiently guided toward the lower side by the exhaust guide holes 48 of the molded portion 47. The exhaust air discharged toward the lower side from the exhaust guide holes 48 is discharged downwards from the through holes 22a serving as the second vents 97.

The exhaust air discharged from the first vents 96 and second vents 97 strikes the upper face 11a of the control board 11 fixed in an inclined manner and cools the control board 11, and further is guided toward to the final vent 17b of the board case 15 following the upper face 11a of the control board 11 and is discharged.

On the other hand, exhaust air passing through the second guide paths D2 moves to the outer side in the radial direction due to the inner-side inclined portion 66d of the partitioning ring 66b, and is discharged to the lower side via the third vents 95, as illustrated in Fig. 11. The exhaust air discharged to the lower side from the third vents 95 flows toward the lower side following the outer peripheral face of the housing 20 of the motor 10. Part of the exhaust air that flows along the outer peripheral face of the housing 20 swirls in spiral form following the upper end face 17a of the board case 15, and is guided to the final vent 17b and discharged, as illustrated in Fig. 13. Due to the upper end face 17a being included in a direction matching the rotational direction of the impeller 70, the exhaust air that is discharged from the third vents 95 and that includes the swirling component in the rotational direction of the impeller 70 and be efficiently guided to the final vent 17b following the outer peripheral face of the motor 10. Part of the exhaust air flowing along the outer peripheral face of the housing 20 passes over a distance shorter than having been guided by the upper end face 17a, and reaches the final vent 17b without passing over the upper end face 17a, and is discharged.

### <First Modification>

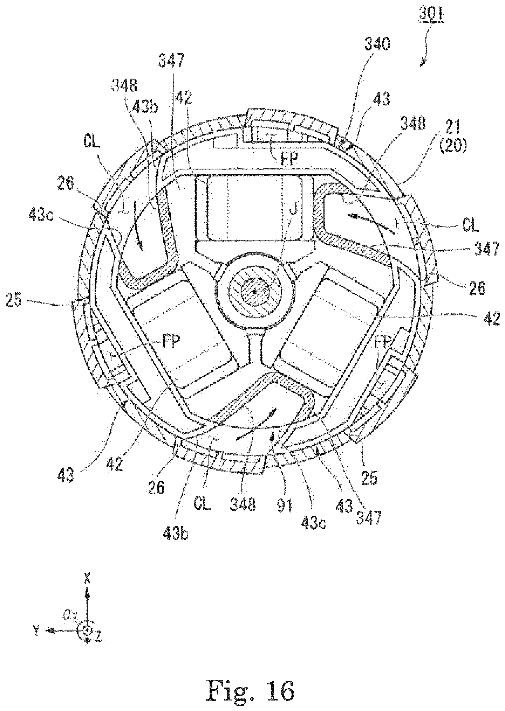

Next, a blower 301 having a hollow member (flow path forming member) 347 instated of the molded portion 47 in the above-described embodiment, will be described as a first modification with reference to Fig. 16. Components that are of the same form as in the above-described embodiment are denoted by the same reference symbols, and description thereof will be omitted.

A stator 340 of the blower 301 has multiple (three) hollow members (flow path forming member) 347. The hollow members 347 are U-shaped with a cross-section taken at a plane orthogonal to the central axis opens to the outer side in the radial direction, with the inner side of the U-shape being hollow. The hollow members 347 are positioned on the inner side of the core back portion 41a in the radial direction. The hollow members 347 are positioned between coils 42 arrayed in the circumferential direction. The hollow members 347 make up exhaust guide holes (flow paths) 348 extending in the vertical direction at the inner side of the core back portion 41a in the radial direction.

The hollow members 347 according to the present modification are disposed by inserting preformed resin materials between coils 42 arrayed in the circumferential direction. According to the present modification, the hollow members 347 can easily configure the exhaust guide holes 348 extending in the axial direction. Accordingly, the blower 301 can cool the interior of the motor 10 via the hollow members 347, and can raise discharge efficiency.

### <Second Modification>

A second modification of the above-described embodiment will be described with reference to the drawings.

### <1. Configuration of Centrifugal Air Blower>

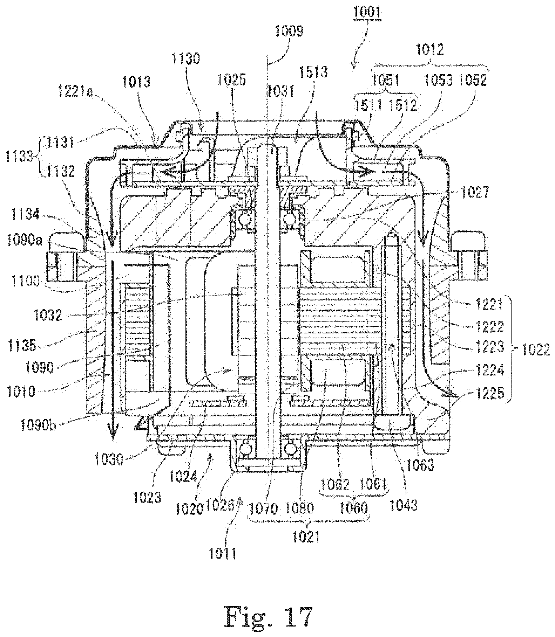

Fig. 17 is a longitudinal-sectional view of a centrifugal air blower (blower) 1001 according to the second modification. This centrifugal air blower 1001 is a turbo-type centrifugal fan that suctions air from above, from suction holes provided on an upper portion, and discharges downwards. Turbo-type centrifugal fans are more efficient and less noisy as compared to sirocco centrifugal fans.

The centrifugal air blower 1001 according to the present modification is provided to a canister-type vacuum cleaner, for example, and is used to generate suction force for the vacuum cleaner. Note however, that the centrifugal air blower according to the present invention may be used in usages other than vacuum cleaners. For example, the centrifugal air blower according to the present invention may be installed in other air blowers such as air supply/exhaust devices used as range hood fans or ducts in buildings, home electrical appliances, medical equipment, industrial large-scale facilities, and so forth, to perform suction and exhaust.

The centrifugal air blower 1001 includes a motor 1011, an impeller 1012, and a blower casing 1013, as illustrated in Fig. 17. A later-described rotating portion (rotor) 1030 of the motor 1011 and the impeller 1012 rotate entered on a central axis 1009. The motor 1011 has the rotating portion (rotor) 1030 and a stationary portion 1020. The stationary portion 1020 further includes a stator 1021. The blower casing 1013 has a lower-side casing (housing) 1135. That is to say, the centrifugal air blower 1001 has the rotor 30, stator 40, lower-side casing (housing) 1135, and impeller 1012.

The lower-side casing 1135 accommodates the rotating portion 1030 and stationary portion 1020. A middle casing 1134 is positioned at the upper side of the lower-side casing 1135. The lower-side casing 1135 has a cylindrical shape extending in the axial direction and opening at the upper side. That is to say, the lower-side casing 1135 has a through hole that passes through the upper side in the vertical direction and opens to the inner side. The through hole of the lower-side casing 1135 connects to alter-described gap 1090.

The motor 1011 is an inner-rotor type brushless DC motor. The motor 1011 has the stationary portion 1020 and rotating portion (rotor) 1030. The stationary portion 1020 is stationary in relation to the blower casing 1013. The rotating portion 1030 is rotatably supported as to the stationary portion 1020, centered on the central axis 1009.

The stationary portion 1020 has the stator 1021, a motor cover 1022, a base plate 1023, a circuit board 1024, an upper bearing 1025, and a lower bearing 1026. The rotating portion 1030 has a shaft 1031 and a rotor 1032.

The stator 1021 generates magnetic flux in accordance with driving voltage supplied from the circuit board 1024. The stator 1021 is disposed at the periphery of the later-described rotor 1032. The stator 1021 has multiple core pieces 1060, multiple insulators 1070, and multiple coils 1080.

The core pieces 1060 are disposed in a ring form around the central axis 1009. The core pieces 1060 have a core back 1061 extending in the circumferential direction, and teeth 1062 that protrude from the core back 1061 toward the inner side in the radial direction. The insulators 1070 are attached to the core pieces 1060. The coils 1080 are configured of conducting wires wound around the teeth 1062 via the insulators 1070. Further detailed structures of the stator 1021 will be described later.

The motor cover 1022 is a resin member that holds the stator 1021. The motor cover 1022 an upper plate portion 1221, a side plate portion 1222, a first fixing portion 1223, a second fixing portion 1224, and at least one base plate fixing portion 1225.

The upper plate portion 1221 is a plate-shaped member that extends generally perpendicular to the central axis 1009 above the stator 1021. A through hole is formed at the generally middle portion of the upper plate portion 1221. The upper bearing 1025 is held in this through hole in the upper plate portion 1221. The side plate portion 1222 is a generally cylindrical shape, and extends from the edge of the upper plate portion 1221 downward in the axial direction.

The base plate fixing portion 1225 protrudes toward the outer side in the radial direction from around the lower end portion of the side plate portion 1222. At least one screw hold is formed in the base plate fixing portion 1225. Base plate fixing portions 1225 are provided at three positions in the circumferential direction in the motor 1011 according to the present modification. Note however, that the number of positions of fixing the motor cover 1022 and base plate 1023 is not restricted to three positions, and may be two positions, or four positions or more. Also, the motor cover 1022 and base plate 1023 may be fixed by other methods, such as adhesion, crimping, or the like. The structures of the first fixing portion 1223 and second fixing portion 1224 will be described later.

The base plate 1023 is a member covering at least part of the lower opening of the motor cover 1022. The base plate 1023 extends generally perpendicular to the central axis 1009. A recess is formed at the middle of the base plate 1023. The lower bearing 1026 is held in this recess in the base plate 1023. The stator 1021, circuit board 1024, upper bearing 1025, lower bearing 1026, and rotor 1032, are accommodated in the interior of a casing configured of the motor cover 1022 and base plate 1023.

The circuit board 1024 is generally plate shaped in the present modification. The circuit board 1024 is positioned generally perpendicular to the central axis 1009, further toward the lower side than the stator 1021. Electronic parts making up an electric circuit for supplying driving current to the coils 1080 are mounted on the circuit board 1024. The ends of conducting wires making up the coils 1080 are electrically connected to the electric circuit on the circuit board 1024.

The upper bearing 1025 rotatably supports the shaft 1031 as to the motor cover 1022. The lower bearing 1026 rotatably supports the shaft 1031 as to the base plate 1023. Ball bearings, where ball-shaped rolling members are interposed between an inner ring and an outer ring, are used for the upper bearing 1025 and lower bearing 1026, for example. An elastic member 1027 is interposed between the motor cover 1022 and the upper bearing 1025. Accordingly, the vibration when the motor 1011 and impeller 1012 rotate is reduced. Note that bearings of types other than ball bearings may be used for the upper bearing 1025 and lower bearing 1026.

The shaft 1031 is disposed along the vertically-extending central axis 1009. More specifically, the shaft 10031 is a post-shaped member disposed along the central axis 1009. The shaft 1031 is supported by the upper bearing 1025 and lower bearing 1026, and can rotate centered on the central axis 1009. The upper end of the shaft 1031 protrudes further to the upper side than the motor cover 1022. The impeller 1012 is directly fixed at the upper end of the shaft 1031. Although the impeller 1012 is fixed at the upper end of the shaft 1031 in the present modification, the impeller 1012 may be indirectly fixed to the shaft 1031, via another member such as a cylindrical member made of a resin material or metal material, or the like.

The rotor 1032 is fixed to the shaft 1031, and rotates centered on the central axis 1009 along with the shaft 1031. The rotor 1032 according to the present modification is made of a magnetic resin formed in a generally cylindrical shape. The outer peripheral face of the rotor 1032 is magnetized with N poles and S poles alternately in the circumferential direction. The outer peripheral face of the rotor 1032 faces the end face of the teeth 1062 at the inner side in the radial direction, across a minute gap. That is to say, the rotor 1032 has magnetic faces facing the stator 1021 in the radial direction.

Note that although a rotor 1032 made of magnetic resin is used in the present modification, the rotor 1032 may be an arrangement where multiple magnets are fixed on the outer peripheral face or the inside of a cylindrical rotor core that is a magnetic material.

When driving the motor 1011, driving current is supplied to the coils 1080 from a power source via the electric circuit on the circuit board 1024, and magnetic fluxes are generated at the multiple teeth 1062. Accordingly, torque is generated on the circumferential direction die to the magnetic fluxes acting between he teeth 1062 and rotor 1032. As a result, the rotating portion 1030 rotates centered on the central axis 1009. The impeller 1012 also rotates along with the rotation of the rotating portion 1030.

The impeller 1012 is a so-called turbo-type centrifugal impeller. The impeller 1012 is disposed above the motor cover 1022 of the motor 1011. The impeller 1012 has an upper shroud 1051, a lower shroud 1052, and multiple blades 1053, as illustrated in Fig. 1.

The upper shroud 1051 includes a cylindrical portion 1511, a sleeve portion 1512, and a suction port 1513. The upper shroud 1051 is disposed above the lower shroud 1052 and multiple blades 1053.

The cylindrical portion 1511 is a generally cylindrical member centered on the central axis 1009. The cylindrical portion 1511 according to the present modification has a diameter that is generally constant regardless of the position in the axial direction. Note that the cylindrical portion 1511 may have a shape where the diameter progressively increases toward the lower side in the axial direction.

The sleeve portion 1512 expands toward the outer side in the radial direction from the lower end of the cylindrical portion 1511. The radial position of the outer edge of the sleeve portion 1512 is generally the same as the position of the outer edge of the lower shroud 1052 in the radial direction. The suction port 1513 is positioned at the middle of the upper shroud 1051. The suction port 1513 is formed of the cylindrical portion 1511 and passes in the axial direction through the upper shroud 1051 at the inner side of the cylindrical portion 1511 in the radial direction.

The lower shroud 1052 is a plate-shaped member that extends generally perpendicular to the central axis 1009, above the motor cover 1022. The lower face of the lower shroud 1052 facings the upper face of the motor cover 1022 in the axial direction. The tip on the inner side in the radial direction of the lower shroud 1052 is fixed to the shaft 1031 of the motor 1011.

The blades 1053 are disposed between the upper shroud 1051 and the lower shroud 1052 in the axial direction. The multiple blades 1053 are disposed generally equidistantly in the circumferential direction. When driving the centrifugal air blower 1001, gas between the upper shroud 1051 and lower shroud 1052 is accelerated to the outer side in the radial direction by the multiple blades 1053.

An upper-side casing 1133 has a top plate portion 1131 and a wall portion 1132. The top plate portion 1131 is positioned above the impeller 1012, and extends in a ring shape following the upper face of the upper shroud 1051. The top plate portion 1131 has a middle hole 1130 at the middle thereof. The middle hole 1130 is connected to the above-described suction port 1513. The wall portion 1132 extends downwards in a cylindrical form from the top plate portion 1131 at the outer side of the motor 1011 in the radial direction. At least the upper end of the motor 1011 and the impeller 1012 are accommodated on the inner side of the wall portion 1132 in the radial direction. That is to say, the wall portion 1132 encompasses at least part of the motor 1011. The inner side face of the wall portion 1132 faces at least part of the motor 1011 in the radial direction.

The blower casing 1013 according to the present modification is formed from three ring-shaped members, which are the upper-side casing 1133, middle casing 1134, and lower-side casing 1135. The middle casing 1134 is disposed beneath the upper-side casing 1133. The lower-side casing 1135 is disposed beneath the middle casing 1134. The upper-side casing 1133 includes the upper end of the top plate portion 1131 and wall portion 1132. The middle casing 1134 and lower-side casing 1135 are cylindrical members forming the wall portion 1132. The blower casing 1013 according to the present modification has been described as being formed of three members, but the blower casing 1013 may be formed of one member, or may be formed of two, or four or more members. That is to say, the blower casing 1013 is formed of at least one member.

The outer peripheral face of the motor cover 1022 and the inner peripheral face of the wall portion 1132 of the blower casing 1013 are disposed across a gap in the radial direction. The gap between the outer peripheral face of the motor cover 1022 and the inner peripheral face of the wall portion 1132 serves as a flow path 1010 of gas when driving the centrifugal air blower 1001. At least part of the flow path 1010 connects to a vent that the wall portion 1132 has.

A communication hole 1100 that connects the outside and inside of the motor cover 1022 is formed in the motor cover 1022 in this space or below this space in the axial direction, the communication hole 1100 communicating with a gap (flow path) 1090.

The gap 1090 has a generally triangular shape or generally trapezoidal shape in plan view. The gap 1090 is positioned on the inner side of the core back 1061 in the radial direction. The gap 1090 has an upper opening 1090a positioned at the upper side of the core back 1061, and a lower opening 1090b positioned at the lower side of the core back 1061. The upper opening 1090a opens toward the upper side in the axial direction. the lower opening 1090b opens toward the lower side in the axial direction. Thus, air can be efficiently guided from the upper opening 1090a toward the lower opening 1090b. The width of the gap 1090 in the circumferential direction progressively decreases toward the inner side in the radial direction. Accordingly, the flow speed of the air flow passing through the region of the gap 1090 at the inner side on the radial direction becomes fast, so the cooling effect is high even if the amount of air supplied is small. Also, a great amount of air can pass through the region of the gap 1090 at the outer side in the radial direction, so cooling effects are high. The gap 1090 may be connected to a through hole 1221a provided to the upper plate portion 1221 of the motor cover 1022 and pass through in the vertical direction, not only being connected to the communication hole 1100. In this case, the flow of exhaust air passing through the gap 1090 becomes smooth, and venting efficiency can be increased.

When driving the centrifugal air blower 1001, driving current is supplied to the stator 1021 of the motor 1011, and the rotating portion 1030 of the motor 1011 and the impeller 1012 rotate. When the impeller 1012 rotates, gas above the upper-side casing 1133 is suctioned via the middle hole 1130 of the upper-side casing 1133 and the suction port 1513 of the impeller 1012, passes between the upper shroud 1051 and lower shroud 1052, and is discharged to the outer side of the impeller 1012 in the radial direction, as indicated by the solid arrows in Fig. 17.

The gas discharged to the outer side of the impeller 1012 in the radial direction strikes against the wall portion 1132 of the upper-side casing 1133 and changes direction downwards and toward the inner side in the radial direction, and advances downwards in the axial direction through the flow path 1010 formed between the outer peripheral face of the motor cover 1022 and inner peripheral face of the wall portion 1132, and the gap 1090 of the stator 1021, as illustrated Fig. 17. This air flow then is discharged to the outside of the centrifugal air blower 1001 via a vent at the lower end of the flow path 1010.

### <2. About the Stator>

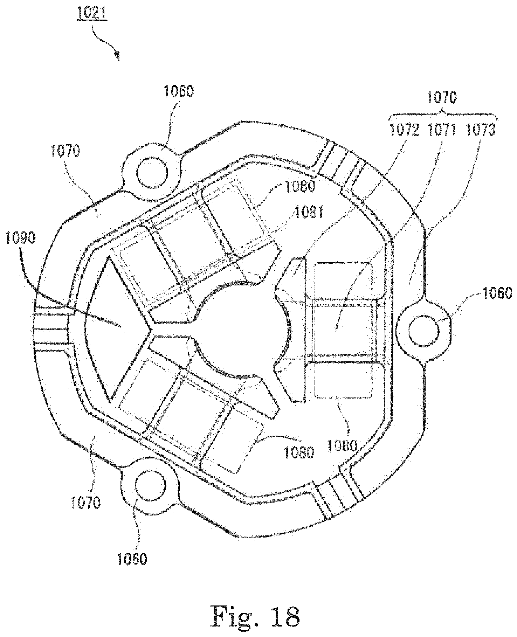

Next, a more detailed structure of the stator 1021 will be described. Fig. 18 is a plan view of the stator 1021. The stator 1021 according to the present modification has three core pieces 1060, three insulators 1070, and three coils 1080, as illustrated in Fig. 18. This configuration enables the number of times of applying electricity to the winding wires per rotation to be reduced, so the motor is readily driven at high speeds. Note however, that in the present invention, the stator may be configured from a single core piece.

Note that the insulators 1070 each have a teeth insulating portion 1071, an inner-side wall portion 1072, and an outer-side wall portion 1073.

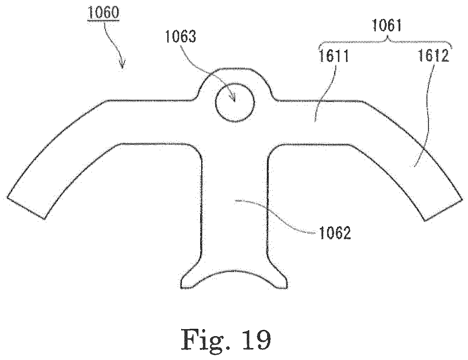

Fig. 19 is a plan view of a core pieces 1060. The multiple core pieces 1060 are formed of a magnetic material, and disposed in the circumferential direction. Laminated steel plates, where magnetic steel plates that are magnetic material have been laminated in the axial direction, for example, are used for the core pieces 1060. Each core piece 1060 has a core back (core back portion) 1061 and tooth (teeth portion) 1062, as illustrated in Fig. 19. The core back 1061 extends in the outer side from the tooth 1062 in the circumferential direction. Note however, that the top view of the core back 1061 does not necessarily have to be an arc shape, as long as the entirety extends roughly in the circumferential direction. The tooth 1062 protrudes from the middle of the core back 1061 in the circumferential direction toward the inner side in the radial direction.

The core back 1061 according to the present modification has a middle core back portion 1611 and a pair of connecting core back portions 1612. The middle core back portion 1611 extends generally perpendicular to the tooth 1062 that extends in the radial direction. The middle core back portion 1611 also extends in both sides in the circumferential direction from the outer-side end of the tooth 1062 in the radial direction. The pair of connecting core back portions 1612 is positioned on both sides of the middle core back portion 1611 in the circumferential direction. Each connecting core back portion 1612 extends from the end of the middle core back portion 1611 in the circumferential direction while bending in a direction drawing closer to the tooth 1062.

This, one tooth 1062 is provided to each of the three core pieces 1060 in the present modification. Accordingly, the number of teeth 1062 that the stator 1021 has is the minimal three for a three-phase synchronous motor. Reducing the number of teeth 1062 enables the number of times of switching of the motor driving circuit per rotation to be reduced. Accordingly, the motor 1011 can be readily made to handle high speeds.

The three core pieces 1060 are arrayed in the circumferential direction, as illustrated in Fig. 18. The core backs 1061 of the three core pieces 1060 are linked into a ring shape. Specifically, the edge portions of connecting core back portions 1612 of adjacent core pieces 1060 are linked to each other. The joints between the core pieces 1060 are fixed by welding, for example.

A fixing hole 1063 that passes through in the axial direction is provided to the core back 1061 of each core piece 1060. That is to say, all of the core pieces 1060 each have a fixing hole 1063 in the present modification. According to this configuration, all of the core pieces 1060 can be firmly fixed to the motor cover 1022 at the time of assembling the centrifugal air blower 1001. The fixing hole 1063 is positioned on the outer side of the teeth portion 1602 in the radial direction. The vicinity of the core back 1061 in the circumferential direction is a position where the magnetic flux density is low when driving the motor 1011, and the role as a flux path is small. Providing the fixing hole 1063 at this position suppresses the fixing hole 1063 from narrowing the flux path.

The motor cover 1022 and core pieces 1060 are fixed by a fixing member inserted into the fixing holes 1063. The motor cover 1022 has three first fixing portions 1223 and three second fixing portions 1224, as illustrated in Fig. 17. The three first fixing portions 1223 each protrude to the inner side in the radial direction from the side plate portion 1222, above the above-described fixing holes 1063. The second fixing portions 1224 protrude toward the inner side in the radial direction from the side plate portion 1222, below the above-described fixing holes 1063. The first fixing portions 1223 and second fixing portions 1224 are each provided with a screw hole extending in the axial direction. When manufacturing the motor 1011, a screw 1043, which is a fixing member, is inserted into the screw hole of the second fixing portion 1224, the fixing hole 1063, and the first fixing portion 1223, at each of the three positions in the circumferential direction. Accordingly, the stator 1021 and motor cover 1022 are fixed. The motor cover 1022 and core pieces 1060 can be firmly fixed by this configuration.

Note that the number of fixing positions of the stator 1021 and motor cover 1022 does not necessarily have to be three. For example, an arrangement may be made where the fixing hole 1063 is provided to only one or two core pieces 1060 of the three core pieces 1060. Also, each core piece 1060 may be provided with two or more fixing holes. The method of fixing the stator 1021 and motor cover 1022 may be other than screwing. For example, the motor cover 1022 may be resin molded with the stator 1021 as an insertion part, thereby fixing the stator 1021 and motor cover 1022.

Now, the coils 1080 are covered at the outer peripheral faces thereof by a covering portion (flow path forming member) 1081. The covering portion 1081 is resin. The coils 1080 are wound on the teeth 1062 of the stator 1021, and the insulation of the coils 1080 is ensured by the coils 1080 being covered by the covering portions 1081, and also vibration and noise can be reduced.

The core pieces 1060 according to this modification has thin laminated steel plates laminated to reduce eddy current when rotating at high speeds, and the strength of the laminated steel plates can be ensured by the coils 1080 being covered by the covering portion 1081.

In addition, the gap 1090 is formed between a covering portion 1081 covering a coil 1080 and a covering portion 1081 covering another adjacent coil 1080 in the circumferential direction. Accordingly, the covering portions 1081 configure the gap 1090. Thus, a wind flow path can be provided between adjacent teeth 1062, and the stator 1021 can be cooled by the air flowing through this flow path, while satisfying airflow properties of the centrifugal air blower. The covering portions 1081 may have a configuration of connecting part of an insulator 1070 or coil 1080 at one side in the circumferential direction with an insulator 1070 or coil 1080 at the other side in the circumferential direction. In this case, the surface area of the covering portions 1081 exposed to the gap 1090 can be increased, and the coils can be efficiently cooled via the covering portions 1081. Note that an example is described in this modification regarding a centrifugal air blower where three core pieces 1060 are employed, so space between adjacent teeth is readily secured and the stator is easier to cool as compared to six core pieces, for example.

Note that the distance in the circumferential direction between one covering portion 1081 and another covering portion 1081 is longer at the upper side in the axial direction of the teeth 1062 than at the middle in the axial direction, and is longer at the lower side in the axial direction of the teeth 1062 than at the middle in the axial direction. This static pressure of the centrifugal air blower 1001 can be raised even higher.

In addition, the covering portions 1081 are formed by molding.

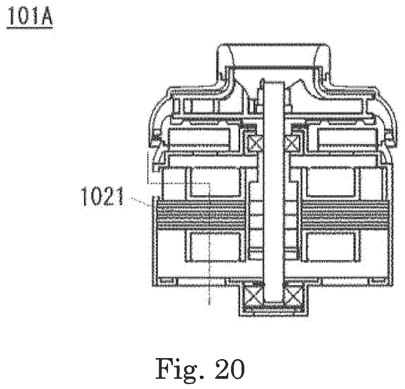

Although description has been made in the above modification regarding a centrifugal air blower used in a canister type vacuum cleaner, this is not restrictive. Fig. 20 illustrates a centrifugal air blower 1001A used in a stick-type or handy-type vacuum cleaner. The stator 1021 the same as in the above modification is used in the centrifugal air blower 1001A as well, and the same advantages can be obtained. Thus, the present invention is applicable to a centrifugal air blower that blows air through a smaller diameter flow path as well.

A structure equivalent to the above modification may also be applied to a motor used for usages other than a vacuum cleaner.

Although description has been made regarding an example where the number of core pieces is three in the above modification, the number may be two, or may be four or more.

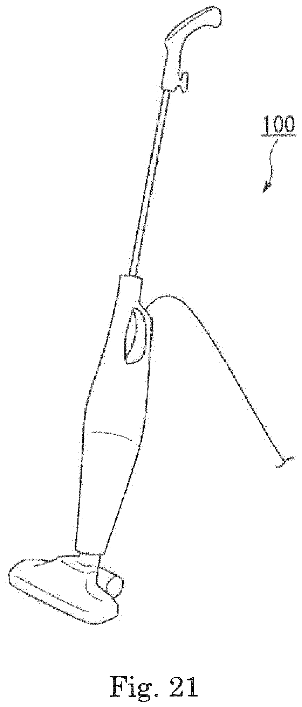

Fig. 21 is a perspective view of a vacuum cleaner 100 having the blower 1 according to the present embodiment. The vacuum cleaner 100 has the blower according to the above-described embodiment and modifications. Accordingly, the blower 1 installed in the vacuum cleaner 100 can be efficiently cooled, and venting efficiency can be improved. Note that the blower according to the embodiment and modifications is not restricted to the vacuum cleaner 100, and can be installed in other electric equipment as well.

Although an embodiment and modifications of the present invention have been described, the configurations and combinations thereof and so forth in the embodiment and modifications are exemplary, and additions, omissions, substitutions, and other changes may be made to the configurations, without departing from the essence of the present invention. The present invention is not restricted by embodiments.

### Reference Signs List

1, 301 blower
20 housing
25, 26 through holes
30, 1032 rotor
31, 1031 shaft
40, 340, 1021 stator
41a core back portion
41b teeth portion
42, 1080 coil
47 molded portion (flow path forming member)
48, 348 exhaust guide hole (flow path)
48a, 1090a upper opening
48b, 1090b lower opening
48c inclined face
48h tapered portion
70, 1012 impeller
100 vacuum cleaner
148f first tapered portion
148h second tapered portion
347 hollow member (flow path forming member)
1001 centrifugal air blower (blower)
1009, J central axis
1010 flow path
1030 rotating portion (rotor)
1061 core back (core back portion)
1062 tooth (teeth portion)
1070 insulator
1081 covering portion (flow path forming member)
1090 gap (flow path)
1135 lower-side casing (housing)

## Claims

1. A blower, comprising:
a rotor that has a shaft disposed following a central axis extending vertically;
a stator positioned at an outer side of the rotor in a radial direction;
a cylindrical housing extending in the axial direction, that accommodates the rotor and the stator; and
an impeller attached to the shaft, at an upper side from the stator;
wherein the stator includes
a ring-shaped core back portion,
a plurality of teeth portions extending from the core back portion toward an inner side in the radial direction,
an insulator that covers at least part of the teeth portions,
a coil wound on each of the teeth portions via the insulator, and
a flow path forming member of which at least part is positioned further at an inner side in the radial direction than the core back portion,
wherein the housing has a through hole that opens to the inner side,
wherein the flow path forming member connects part of the insulator or the coil at one side in the circumferential direction and part of the insulator or the coil at another side in the circumferential direction, and forms a flow path that passes further at an inner side in the radial direction than the core back portion,
and wherein the flow path connects to the through hole of the housing.

2. The blower according to Claim 1, wherein at least part of an inner side face of the core back portion in the radial direction is exposed to the flow path.

3. The blower according to either of Claim 1 or 2,
wherein the flow path forming member has
an upper opening that opens to an upper side of the core back portion, and
a lower opening that opens to a lower side of the core back portion,
and wherein the flow path connects the upper opening and the lower opening.

4. The blower according to any one of Claims 1 through 3, wherein the flow path forming member covers the coil.

5. The blower according to Claim 3,
wherein the lower opening opens toward a lower side in the axial direction.

6. The blower according to Claim 5,
wherein the upper opening opens toward an upper side in the axial direction.

7. The blower according to Claim 5,
wherein the upper opening opens toward the outer side in the radial direction.

8. The blower according to Claim 7,
wherein the flow path forming member has an inclined face that is positioned progressively further at a forward side in rotational direction of the impeller as to the radial direction, the further toward the inner side in the radial direction of the upper opening.

9. The blower according to any one of Claims 1 through 8,
wherein the flow path forming member is a hollow member positioned between the coils arrayed in the circumferential direction.

10. The blower according to any one of Claims 1 through 9,
wherein the flow path forming member has a tapered portion where a flow path cross-sectional area progressively increases from the upper side toward the lower side.

11. The blower according to any one of Claims 1 through 10,
wherein the flow path forming member has
a first tapered portion where the flow path cross-sectional area progressively decreases from the upper side toward the lower side, and
a second tapered portion, positioned at the lower side of the first tapered portion, where a flow path cross-sectional area progressively increases from the upper side toward the lower side.

12. A vacuum cleaner, comprising the blower according to any one of Claims 1 through 11.
